# EUROPEAN PATENT APPLICATION

(11) **EP 4 730 760 A1**
(43) Date of publication of application: **22.04.2026**
(21) Application number: 23941661.3
(22) Date of filing: 16.06.2023
(51) Int. Cl.: H04N 7/18, G06V 40/16, G06V 40/18

(54) **IMAGE PROCESSING SYSTEM, PROGRAM, AND IMAGE PROCESSING METHOD**

(71) Applicant: EIZO Corporation, Ishikawa 924-8566 (JP)
(72) Inventor: MORIMOTO, Toshiaki, Kobe-City, Hyogo 650-0034 (JP)
(74) Representative: McKinnon, Alistair James
(86) International application number: PCT/JP2023/022509
(87) International publication number: WO 2024/257362

(57) **Abstract**

To provide an image processing system that appropriately calculates a mask region. An image processing system is provided that includes a mask region calculation unit, wherein the mask region calculation unit acquires a detection result of an image detection process for an image of a frame in a video, and the mask region calculation unit calculates a mask region for an image of a first frame based on at least the detection result of an image of a second frame. By the image detection process, a detection boundary or a detection region is associated with at least the image of the second frame, and a detection score is set for the detection boundary or the detection region. The detection result includes the detection boundary or the detection region and the detection score, and the second frame is a frame at a time point different from the first frame on the time axis of the video.

## Description

### Technical Field

The present invention relates to an image processing system, a program, and an image processing method.

### Background Art

Patent Literature 1 discloses a technique for applying a mask process to a video. In Patent Literature 1, a face is detected and a mask process is applied to a face image to protect personal privacy. However, face recognition does not necessarily succeed in all frames of the video. Therefore, Patent Literature 1 adopts several image processing controls (such as a mask at a predicted face position, stopping delivery, delivering an alternative image, or excluding a detection-failed frame) when face detection fails.

### Citation List

### Patent Literature

[Patent Literature 1] International Publication No. WO2016/088583

### Summary of Invention

### Technical Problem

In an image detection process, a detection score is often output along with a detection boundary or the like. The detection score represents the accuracy (certainty) of detecting a detection target. Patent Literature 1 does not recognize the use of a detection score, and the usefulness of the detection score is overlooked. The present inventor has found a novel technique capable of appropriately calculating a mask region by utilizing a detection score, even in a situation where image detection does not necessarily succeed.

The present invention provides an image processing system, a program, and an image processing method that can appropriately calculate a mask region.

### Solution to Problem

According to the present disclosure, the following inventions are provided.
[1] An image processing system comprising a mask region calculation unit, wherein the mask region calculation unit acquires a detection result of an image detection process for an image of a frame in a video, the mask region calculation unit calculates a mask region for an image of a first frame based on at least the detection result for an image of a second frame, by the image detection process, a detection boundary or a detection region is associated with at least the image of the second frame, and a detection score is set for the detection boundary or the detection region, the detection result includes the detection boundary or the detection region and the detection score, and the second frame is a frame at a time point different from the first frame on a time axis of the video.
[2] The system according to [1], wherein by the image detection process, a first detection boundary or a first detection region is associated with the image of the first frame, a first detection score is set for the first detection boundary or the first detection region, a second detection boundary or a second detection region is associated with the image of the second frame, and a second detection score is set for the second detection boundary or the second detection region, the mask region calculation unit calculates the mask region such that a mask region of a detection target in the first frame is larger in an object movement situation than in an object stationary situation when the first and second detection scores are equal to or greater than a first threshold, the object stationary situation is a situation where a position of the detection target is the same between the first and second frames, and the object movement situation is a situation where the position of the detection target is different between the first and second frames.
[3] The system according to [1] or [2], wherein by the image detection process, a first detection boundary or a first detection region is associated with the image of the first frame, a first detection score is set for the first detection boundary or the first detection region, a second detection boundary or a second detection region is associated with the image of the second frame, and a second detection score is set for the second detection boundary or the second detection region, the mask region calculation unit calculates the mask region so as not to set a mask in at least a part of a non-overlapping region when the first and second detection scores are less than a first threshold, and the non-overlapping region is a region (a) or a region (b) described below, (a) a region inside the first or second detection boundary and in which the first detection boundary and the second detection boundary do not overlap, (b) a region inside the first or second detection region and in which the first detection region and the second detection region do not overlap.
[4] The system according to any one of [1] to [3], wherein by the image detection process, a first detection boundary or a first detection region is associated with the image of the first frame, a first detection score is set for the first detection boundary or the first detection region, a second detection boundary or a second detection region is associated with the image of the second frame, and a second detection score is set for the second detection boundary or the second detection region, the mask region calculation unit calculates the mask region based on a figure for calculation in the image of the first frame, and the figure is determined based on the first and second detection boundaries or the first and second detection regions and the first and second detection scores.
[5] The system according to any one of [1] to [4], wherein by the image detection process, an eye detection region for detecting an eye included in an image as a detection target is associated with the image of each frame, and by the image detection process, the detection boundary is set so as to surround the eye detection region, or the detection region is set so as to overlap the eye detection region.
[6] The system according to [5], wherein the system further comprises an eye detection unit for executing the image detection process, the eye detection unit: sets an eye detection score for the eye detection region, and sets the detection score of an inner region of the detection boundary or the detection score of the detection region based on the eye detection score.
[7] The system according to [6], wherein the eye detection unit sets the detection score of the inner region of the detection boundary or the detection score of the detection region according to a rule (c) or (d) below, (c) when both eyes are detected for a face included in the image of a frame, and an eye detection score equal to or greater than a second threshold is set only for one eye detection region of the both eyes, the detection score of the inner region of the detection boundary or the detection score of the detection region is set by the eye detection score of the one eye detection region, and the detection boundary is set so as to surround the one eye detection region and not to surround the other eye detection region, and the detection region is set so as to overlap the one eye detection region and not to overlap the other eye detection region, and (d) when only a single eye is detected for a face included in the image of a frame, the detection score of the inner region of the detection boundary or the detection score of the detection region is set by the eye detection score set for the eye detection region of the single eye.
[8] The system according to [5] or [6], wherein by the image detection process, the eye detection region and the detection score are associated with each of both eyes of a face included in each image of the first and second frames, the mask region calculation unit calculates the mask region so that a mask is provided larger on a side of a left eye's eye detection region than on a side of a right eye's eye detection region, when a left eye's eye detection score is higher than a right eye's eye detection score in each image of the first and second frames, and the mask region calculation unit calculates the mask region so that a mask is provided larger on a side of a right eye's eye detection region than on a side of a left eye's eye detection region, when a right eye's eye detection score is higher than a left eye's eye detection score in each image of the first and second frames.
[9] The system according to any one of [1] to [8], wherein the mask region calculation unit acquires a plurality of the second frames, and the plurality of second frames include a frame in the future of the first frame and a frame in the past of the first frame.
[10] An image processing method for causing a computer to execute a mask region calculation step, wherein the mask region calculation step acquires a detection result of an image detection process for an image of a frame in a video, the mask region calculation step calculates a mask region for an image of a first frame based on at least the detection result for an image of a second frame, the image detection process associates a detection boundary or a detection region with at least the image of the second frame, and sets a detection score for the detection boundary or the detection region, the detection result includes the detection boundary or the detection region and the detection score, and the second frame is a frame at a time point different from the first frame on a time axis of the video.
[11] A program for causing a computer to execute a mask region calculation process, wherein the mask region calculation process causes the computer to acquire a detection result of an image detection process for an image of a frame in a video, the mask region calculation process causes the computer to calculate a mask region for an image of a first frame based on at least the detection result for an image of a second frame, the image detection process associates a detection boundary or a detection region with at least the image of the second frame, and sets a detection score for the detection boundary or the detection region, the detection result includes the detection boundary or the detection region and the detection score, and the second frame is a frame at a time point different from the first frame on a time axis of the video.

According to the present invention, there is an advantage that a mask region of a first frame is appropriately calculated.

### Brief Description of Drawings

FIG. 1 is a diagram showing an outline of an image processing system 1 according to a first embodiment.
FIG. 2A is a block diagram showing a hardware configuration of the image processing system 1 according to the first embodiment. FIG. 2B is a block diagram showing a functional configuration of a control unit 11 according to the first embodiment. FIG. 2C is a block diagram showing a functional configuration of a storage unit 12 according to the first embodiment.
FIG. 3 is an example of a processing flow of the image processing system 1 according to the first embodiment.
FIG. 4 is an operation example of the first embodiment (with a hidden detection target P1), and a schematic diagram explaining an example of each process from detection to a mask process.
FIG. 5A shows an example of overlapping of a first detection boundary Bₖ and second detection boundaries Bₖ₋ₙ and Bₖ₊ₘ in a single first frame fₖ and two second frames fₖ₋ₙ and fₖ₊ₘ (for example, n=m=5). FIG. 5B shows an example of a figure Dₖ for calculation (refer to a hatched region) in the example of FIG. 5A. FIG. 5C is an example of a final calculation result of a mask region Mₖ in the example of FIG. 5B.
FIG. 6 is an example of an operation of a comparative example, and an example of determining a presence or absence of a mask for each detection boundary by a simple comparison of a detection score with a first threshold Aₜₕ₁ in an image of each frame fₖ, fₖ₊ₘ.
FIG. 7A shows an example of overlapping of a first detection boundary Bₖ and second detection boundaries Bₖ₋ₙ, Bₖ₋ₙ₊₁, Bₖ₊ₘ₋₁, and Bₖ₊ₘ in a single first frame fₖ and four second frames fₖ₋ₙ, fₖ₋ₙ₊₁, fₖ₊ₘ₋₁, and fₖ₊ₘ (for example, n=m=5). FIG. 7B shows an example of a figure Dₖ for calculation (refer to a hatched region) in the example of FIG. 7A. FIG. 7C is an example of a final calculation result of a mask region Mₖ in the example of FIG. 7B.
FIG. 8A shows an example of a case where a detection score is lower than a first threshold Aₜₕ₁ in the first and second detection boundaries. FIG. 8B shows an example of a figure Dₖ for calculation (refer to a hatched region) in the example of FIG. 8A. FIG. 8C is an example of a final calculation result of a mask region Mₖ of FIG. 8B.
FIG. 9 is an operation example of the first embodiment (without a hidden detection target P1), and a schematic diagram explaining another example of each process from detection to a mask process.
FIG. 10 is a schematic diagram for explaining an operation example of the first embodiment (oblique movement).
FIG. 11 is a block diagram showing a functional configuration of a control unit 11 according to a second embodiment.
FIG. 12 is an example of an image detection process (a detection boundary setting method) according to a second embodiment.
FIG. 13 is an example of a detection score setting based on an eye detection score according to a second embodiment.
FIG. 14 is an operation example of a second embodiment (with a hidden detection target P1a), and a schematic diagram explaining each detection boundary Bₖ, Bₖ₋ₙ, Bₖ₊ₘ of the first and second frames fₖ, fₖ₋ₙ, fₖ₊ₘ, superimposed on the image of the first frame fₖ.
FIG. 15 is a diagram for explaining an example of a detection score combination method for calculating a mask region with a detection boundary of a second embodiment.
FIG. 16A is an example of a figure Dₖ for calculation (refer to a hatched region) in the example of FIG. 15. FIG. 16B is an example of a final calculation result of a mask region Mₖ in the example of FIG. 15.
FIG. 17 is another example of the image detection process (the detection boundary setting method) according to the second embodiment.
FIG. 18 is another operation example of the second embodiment (with a hidden detection target P1a), and a schematic diagram explaining another example of each process from detection to a mask process.
FIG. 19A is an example of a figure Dₖ for calculation (refer to a hatched region) in the example of FIG. 18. FIG. 19B is an example of a final calculation result of a mask region Mₖ in the example of FIG. 18.
FIG. 20 is a diagram showing a modification example for setting a detection boundary and a detection score for only a single eye in the case of FIG. 12.

### Description of Embodiments

Hereinafter, an embodiment of the present invention will be described. Various features shown in the embodiment described below can be combined with each other. In addition, an invention is independently established for each feature.

To describe an outline, the embodiment provides a technique for applying a mask process to a video. In the embodiment, a detection target is detected by an image detection process, and a detection result for a target frame for mask region calculation and a detection result for several frames that are temporally before and/or after the target frame are acquired. A mask region is calculated based on these detection results (specifically, a detection boundary and a detection score). Hereinafter, a first and a second embodiment will be specifically described.

### <1. First Embodiment>

### (1-1. Outline of System Configuration)

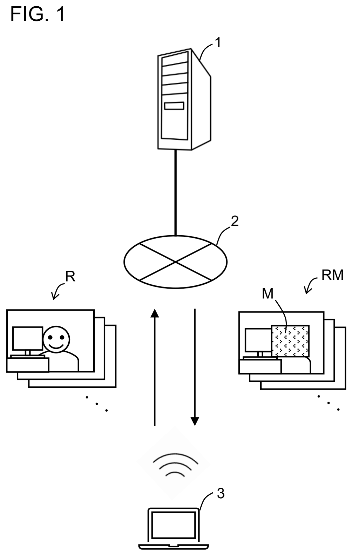

As illustrated in FIG. 1, an image processing system 1 of the first embodiment is connected to a user terminal 3 via a communication line 2. A video R captured by an arbitrary imaging device (for example, a digital video camera) is uploaded to the image processing system 1 by the user terminal 3. The video R is composed of a plurality of frame images. The image processing system 1 generates a masked video RM with a mask M added by performing a mask process on the video R. The masked video RM can be downloaded by the user terminal 3.

### (1-2. Hardware Configuration of Image Processing System 1)

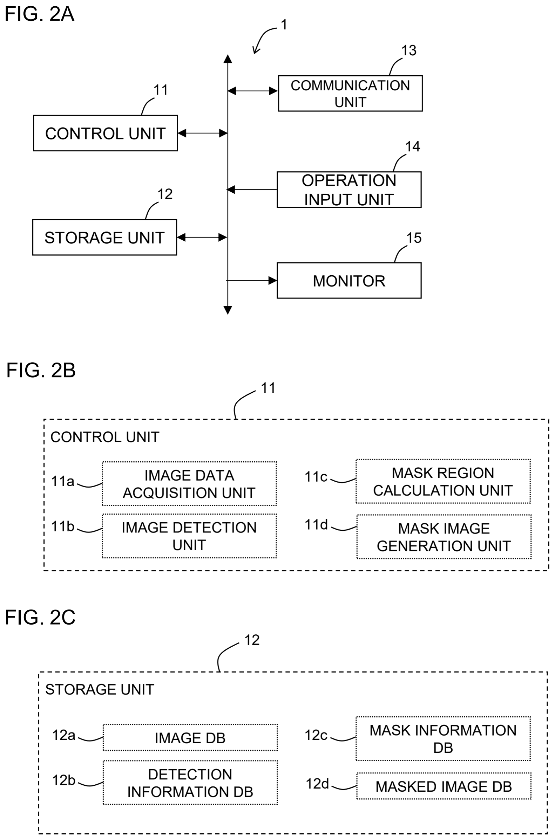

As illustrated in FIG. 2A, the image processing system 1 includes a control unit 11, a storage unit 12, and a communication unit 13. In addition, the image processing system 1 may include an operation input unit 14 and a monitor 15 as shown. The operation input unit 14 is composed of a keyboard, a mouse, and the like, and receives input of various operations. The control unit 11 controls the overall operation of the image processing system 1. A part of the storage unit 12 is composed of, for example, a RAM (Random Access Memory) or a DRAM (Dynamic Random Access Memory). A part of the storage unit 12 is used as a work area or the like when a process based on various programs is executed by the control unit 11. In addition, a part of the storage unit 12 is, for example, a non-volatile memory such as a ROM (Read Only Memory), or various large-capacity storage devices. A part of the storage unit 12 stores various data and a program used for a process of the control unit 11. The programs stored in the storage unit 12 are, for example, an OS (Operating System) for realizing a basic function of the image processing system 1, a driver for controlling various hardware, and a program for realizing various functions. The program stored in the storage unit 12 includes a computer program according to the first embodiment. The communication unit 13 has a function of connecting to the communication line 2. Each of these components, such as the control unit 11, is electrically connected to each other via a system bus.

### (1-3. Functional Block Configuration of Control Unit 11 and Storage Unit 12)

As illustrated in FIG. 2B, the control unit 11 includes an image data acquisition unit 11a, an image detection unit 11b, a mask region calculation unit 11c, and a mask image generation unit 11d. As illustrated in FIG. 2C, the storage unit 12 includes various databases (DB). Specifically, the storage unit 12 includes an image DB 12a, a detection information DB 12b, a mask information DB 12c, and a masked image DB 12d.

### (1-4. Processing Operation of First Embodiment)

### (1-4-1. Outline of Processing)

The image data acquisition unit 11a receives a video R and stores data of a plurality of frame images constituting the video R in the image DB 12a. Each frame image has a frame ID, and each frame in the video R can be uniquely identified by the frame ID.

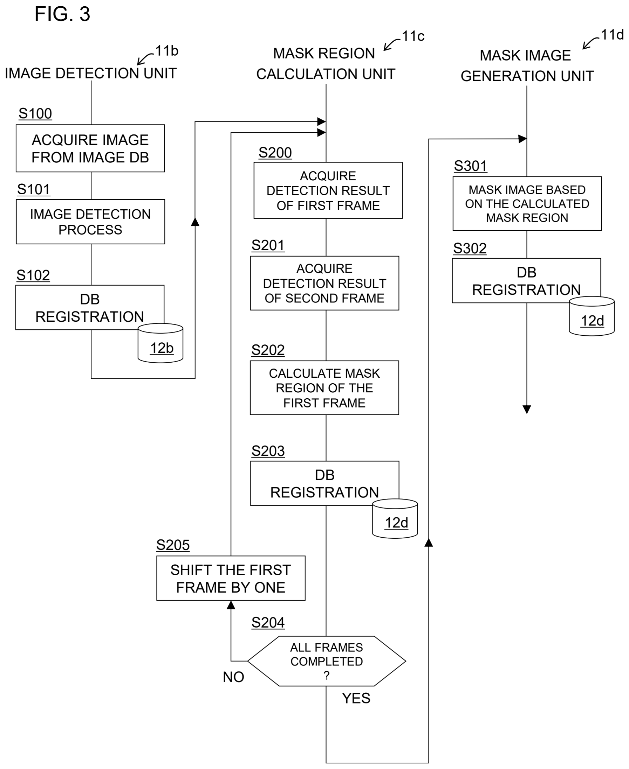

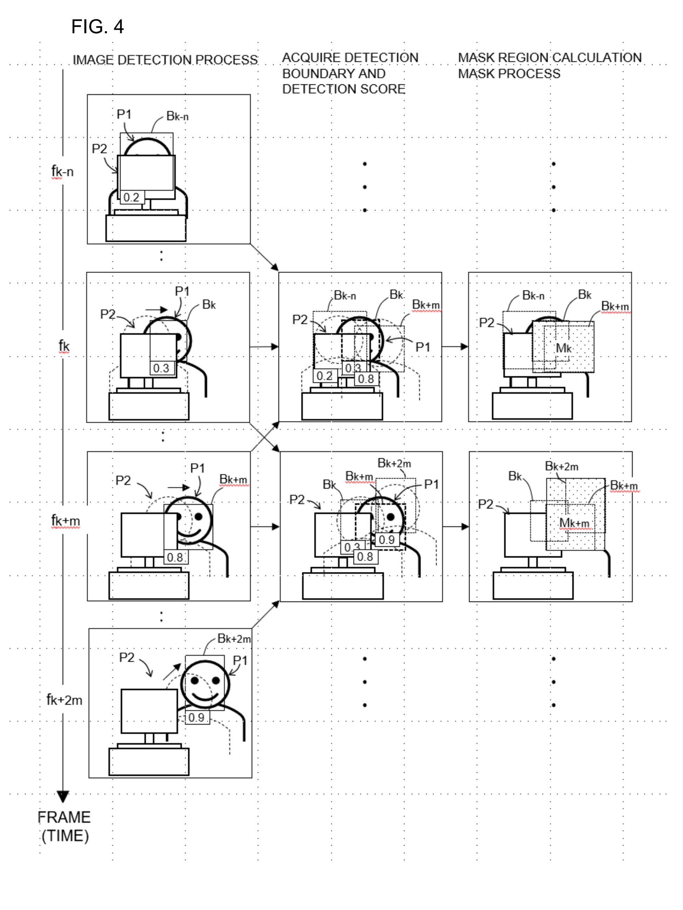

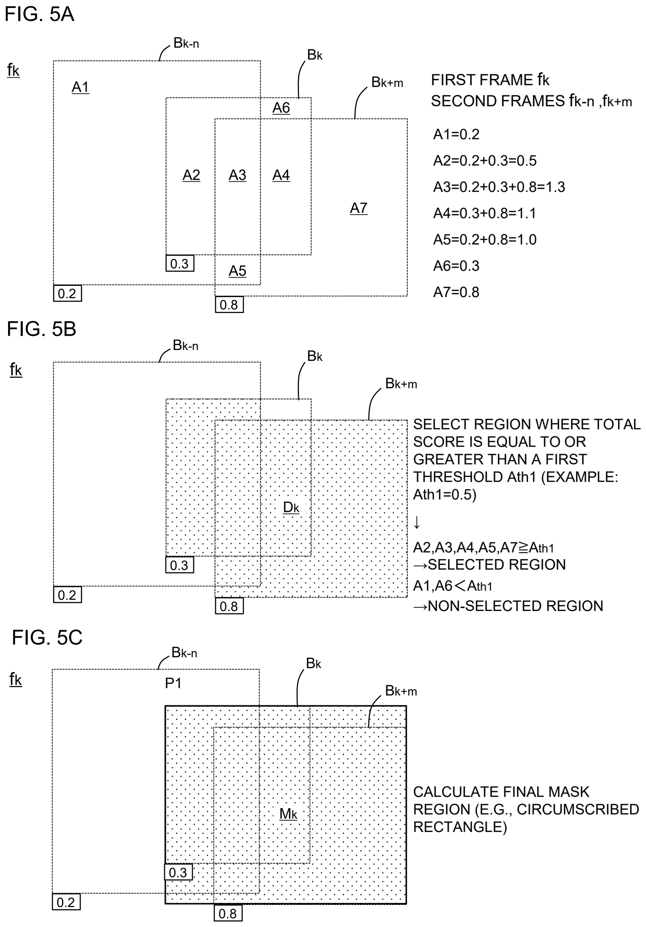

The subsequent processing operation will be described with reference to FIGS. 3, 4, and 5A to 5C. FIG. 3 illustrates a processing flow of the first embodiment. FIG. 4 is a first operation example of the first embodiment (with a hidden detection target P1) and shows a scene in the video R. FIGS. 5A to 5C show an example of a mask region calculation method.

The processing flow of FIG. 3 shows a process of each of the image detection unit 11b, the mask region calculation unit 11c, and the mask image generation unit 11d. The mask region calculation unit 11c receives a processing result of the image detection unit 11b, calculates a mask region of each frame image, and transmits it to the mask image generation unit 11d. The image detection process of the image detection unit 11b is not limited, and various known image detection techniques can be arbitrarily adopted, for example, an object detection, or for example, a region detection (for example, an image segmentation). The image detection unit 11b may execute, for example, a rule-based image detection process, or may include, for example, an image detection model that executes a machine inference. The image detection model may be, for example, a model that implements a learning parameter obtained by performing an arbitrary machine learning such as a deep learning algorithm. In the first embodiment, as an example, an object detection model that performs a machine inference is adopted for the image detection unit 11b. As an example, the image detection unit 11b can adopt various known detection models according to a use and a required accuracy. For example, in the first embodiment, an arbitrary machine-learned detection model that performs a person's face detection can be adopted, and the detection model may be, for example, a neural network in which a learned parameter by a deep learning algorithm is implemented.

The mask region calculation unit 11c acquires a detection result of an image of a frame in a video R in a single mask region calculation process. A detection result of detecting a detection target (as an example, a detection boundary and a detection score) is associated with the image of the frame by the image detection unit 11b. In the first embodiment (and a second embodiment described later), a frame in a video is distinguished as a "first frame" and a "second frame". The first frame is a frame for which a mask region is to be calculated. The second frame is one or more frames at a time point different from the first frame on the time axis of the video. Specifically, the second frame includes a frame in the past and/or a frame in the future of the first frame.

Next, to describe an outline of FIG. 4, the four screens in a left column of FIG. 4 are diagrams in which a detection result of an image detection process is superimposed on an image of each frame. The two screens in a center column of FIG. 4 are diagrams for explaining a process of the mask region calculation unit 11c, and are diagrams in which a detection boundary and a detection score of a first and a second frame are superimposed on an image of the first frame. The two screens in a right column of FIG. 4 show the calculated mask regions Mₖ and Mₖ₊ₘ. In FIG. 4, in a frame fₖ₋ₙ, a part of a detection target P1 is hidden by a non-detection target P2. In FIG. 4, as an example, the detection target P1 is a person's face, and the non-detection target P2 is a back of a monitor. After the frame fₖ, the detection target P1 is gradually exposed.

In the example of FIG. 4, a frame fₖ₋ₙ is a frame that goes back by about n frames in the past from a frame fₖ. A frame fₖ₊ₘ is a frame that precedes a frame fₖ by about m frames in the future. n and m are arbitrary natural numbers, and as an example, n=m=5 may be used.

### (1-4-2. Steps S100 to S102 of FIG. 3)

To describe the processing flow of FIG. 3, first, in a step S100, the image detection unit 11b acquires a frame image of a video R from an image DB 12a. Subsequently, the image detection unit 11b performs an image detection process on each acquired frame image (S101).

The image detection unit 11b outputs a detection result by performing an image recognition and an object detection on each frame image. The detection result includes a detection boundary that specifies a detection target and a detection score of the detection boundary. In a step S102, the image detection unit 11b registers the detection results for all frame images in a detection information DB 12b.

Referring to FIG. 4, the image detection unit 11b executes an image detection process for each of a frame fₖ₋ₙ, a frame fₖ, a frame fₖ₊ₘ, and a frame fₖ₊₂ₘ. The image detection unit 11b outputs a detection boundary Bₖ₋ₙ, Bₖ, Bₖ₊ₘ, and Bₖ₊₂ₘ, and a detection score (0.2, 0.3, 0.8, 0.9) as a detection result. This detection result is stored in the detection information DB 12b.

### (1-4-3. Steps S200 to S205 of FIG. 3)

Following the step S102, the mask region calculation unit 11c executes the processes of steps S200 to S205. In this example, the mask region calculation unit 11c applies the processes of the steps S200 to S205 to all frame images of a video R. That is, the processes of the steps S200 to S203 are repeated while each frame f₁, f₂, f₃... of the video R is sequentially set as a first frame.

For example, a frame fₖ of FIG. 4 is set as a first frame (where k is a natural number greater than 5). In this case, the mask region calculation unit 11c acquires a detection result of a first frame fₖ and a plurality of second frames fₖ₋ₙ and fₖ₊ₘ in the video R (S200, S201). Please refer to the screens of the frames fₖ, fₖ₋ₙ, and fₖ₊ₘ in the left column of FIG. 4. A first detection boundary Bₖ that detects a detection target P1 and a first detection score (0.3) are associated with an image of the first frame fₖ. A second detection boundary Bₖ₋ₙ and Bₖ₊ₘ, and a second detection score (0.2, 0.8) are associated with the images of the second frames fₖ₋ₙ and fₖ₊ₘ, respectively. These detection results are acquired for calculating a mask region of the first frame fₖ.

Next, the mask region calculation unit 11c calculates a mask region Mₖ for an image of a first frame fₖ based on at least a detection result of the images of second frames fₖ₋ₙ and fₖ₊ₘ (S202). In the first embodiment, as an example, the process of the step S202 is executed based on a detection result of each image of the first frame fₖ and the second frames fₖ₋ₙ and fₖ₊ₘ (that is, a first detection boundary Bₖ, a second detection boundary Bₖ₋ₙ and Bₖ₊ₘ, and a first and a second detection score). Referring to a screen in a row of a frame fₖ in the center column of FIG. 4, the first detection boundary Bₖ, the second detection boundaries Bₖ₋ₙ and Bₖ₊ₘ, and the first detection score (0.3) and the second detection score (0.2, 0.8) are superimposed.

Here, a specific example of the process of the step S202 will be described with reference to FIGS. 5A to 5B. FIGS. 5A to 5B show an example of a procedure for calculating a mask region Mₖ of the first frame fₖ. The regions A1 to A7 are determined by overlapping three detection boundaries Bₖ₋ₙ, Bₖ, and Bₖ₊ₙ. As an example, the mask region calculation unit 11c adds a detection score in an overlapping region where the detection boundaries overlap. For example, since a region A2 is an overlapping region where a first detection boundary Bₖ (first detection score 0.3) and a second detection boundary Bₖ₋ₙ (second detection score 0.2) overlap, the region A2 has a total score of 0.5. The total score of each overlapping region is described in a right part of FIG. 5A. In FIG. 5B, the regions A2, A3, A4, A5, and A7 whose total scores are equal to or greater than a first threshold Aₜₕ₁ are selected as a candidate for a mask region. The first threshold Aₜₕ₁ is, for example, 0.5. A figure defined by an outer periphery of these selected regions (A2, A3, A4, A5, and A7) is adopted as a "figure Dₖ for calculation" for calculating a mask region. The figure Dₖ can be determined based on the first and second detection boundaries Bₖ₋ₙ, Bₖ, and Bₖ₊ₙ and the first and second detection scores. The figure Dₖ is actually a set of pixels in the image of the frame fₖ, and can be defined by pixel coordinate data in the image. The mask region Mₖ can be variously calculated based on the figure Dₖ. As an example, the mask region calculation unit 11c calculates a rectangle circumscribing the figure Dₖ as a final mask region Mₖ of the first frame fₖ (refer to FIG. 5C).

The mask region Mₖ calculated in the step S202 is stored in a mask information DB 12c (S203).

Thereafter, it is determined whether or not the mask region calculation process is completed for all frames (S204). For example, it may be determined whether a total number of frames of a video R matches a frame number k of the current first frame. If not completed, the process of the mask region calculation unit 11c returns to the step S200 after shifting the first frame by one (that is, after incrementing k) (S205). By doing so, a frame fₖ, fₖ₊₁, fₖ₊₂... are sequentially set as a first frame, and the processes of the steps S200 to S203 are applied to all frames.

With reference to FIG. 4, a case where a frame fₖ₊ₘ is set as a first frame will be described. As can be seen from the screen in the row of the first frame fₖ₊ₘ in the center column of FIG. 4, a detection boundary Bₖ, Bₖ₊ₘ, and Bₖ₊₂ₘ and a detection score (0.3, 0.8, 0.9) of the first frame fₖ₊ₘ and the second frames fₖ and fₖ₊₂ₘ are acquired for calculating the mask region of the first frame fₖ₊ₘ (S200, S201). The mask region calculation unit 11c calculates a mask region Mₖ₊ₘ for the image of the first frame fₖ₊ₘ based on the detection boundaries Bₖ₊ₘ, Bₖ, and Bₖ₊₂ₘ of each image of the first frame fₖ₊ₘ and the second frames fₖ and fₖ₊₂ₘ and their detection scores (S202). The calculated mask region Mₖ₊ₘ is stored in a mask information DB 12c (S203). Thereafter, the process proceeds to a step S204 again. The processes of the steps S200 to S205 are looped until the mask region calculation process is completed for all frames.

Eventually, when the mask region calculation process is completed for all frames, a determination result of the step S204 becomes affirmative (YES). Thereafter, the process proceeds to a step S301.

In this manner, the mask region calculation unit 11c sequentially sets each frame in the video R as a first frame. Thereby, the mask region calculation unit 11c can execute a mask region calculation process for all frame images of the video R. Note that the first frame may be some frames fₖ near a head of the video R or some frames fₖ near a tail of the video R, and a second frame fₖ₋ₙ and fₖ₊ₘ may not be acquired depending on a value of n and m. In that case, either a future or a past frame may be adopted as a second frame to calculate a mask region.

### (1-4-4. Steps S301 to S302 of FIG. 3)

The mask image generation unit 11d performs a predetermined mask process on each frame image according to the calculated mask region (S301). The mask process may be, for example, a mosaic process. The image on which the mask process is performed is registered in a masked image DB (S302). As a result, a masked video RM is generated, and the masked video RM can be downloaded by the user terminal 3.

According to the first embodiment described above, a mask region of a first frame can be appropriately calculated. That is, in an image detection process, a detection result includes a detection score. The detection score represents the accuracy (certainty) of detecting a detection target. According to the first embodiment, a detection result of a second frame (that is, a first detection boundary and a first detection score) can be included in a process of a mask region calculation unit 11c. This makes it possible to appropriately calculate the mask region of the first frame.

The detection score by an image detection process S101 is not always stable, and changes in various ways due to, for example, a movement of a detection target P1 in a video R. For example, in the video R, a detection target P1 may be displaced (specifically, for example, a parallel movement and/or a rotation around an arbitrary rotation axis), the detection target P1 may be hidden by another object (a non-detection target P2), a whiteout of an image may occur, or a detection error may occur due to a detection model of the image detection unit 11b. In these cases, an image detection fails, or even if the image detection succeeds, the detection score becomes unstable. According to the first embodiment, there is an advantage that a mask region can be appropriately calculated even under such a situation.

### (1-5. Comparative Example)

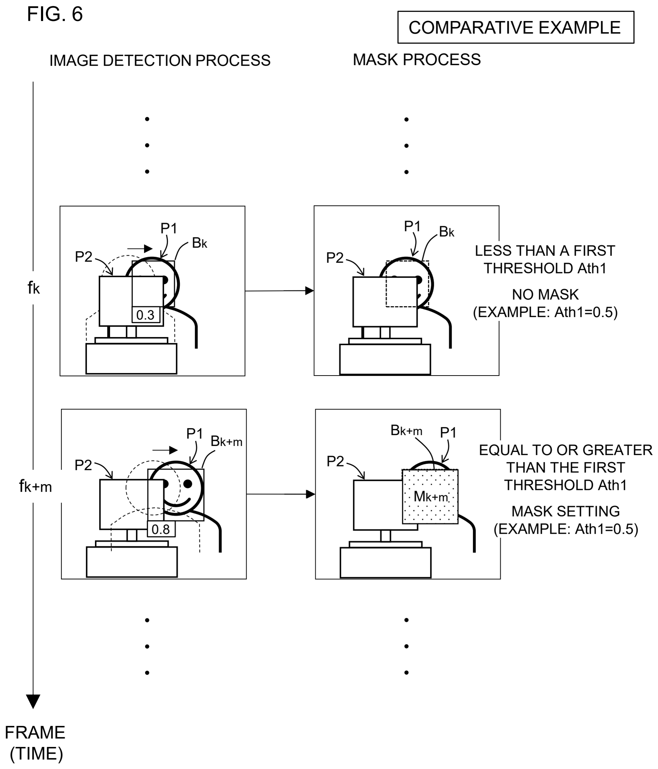

In a comparative example of FIG. 6, a presence or absence of a mask for each detection boundary is determined by a simple comparison between a detection score and a first threshold Aₜₕ₁ in an image of each frame. In this way, when a detection score is low, as in a frame fₖ, a mask region is not calculated. In this respect, according to the first embodiment, the mask region can be appropriately calculated (refer to FIG. 4).

### (1-6. Modifications, etc.)

### (1-6-1. Variations of Image Detection Process and Mask Region Calculation)

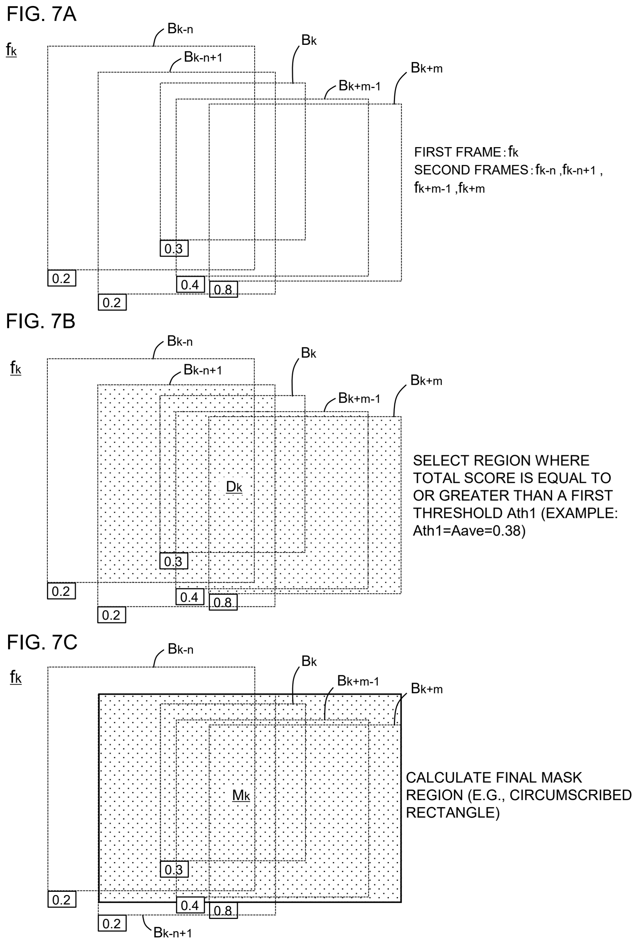

FIGS. 7A to 7C illustrate a first detection boundary Bₖ and a second detection boundary Bₖ₋ₙ, Bₖ₋ₙ₊₁, Bₖ₊ₘ₋₁, and Bₖ₊ₘ in a single first frame fₖ and four second frames fₖ₋ₙ, fₖ₋ₙ₊₁, fₖ₊ₘ₋₁, and fₖ₊ₘ. Even if the number of the second frames increases, the calculation method illustrated in FIGS. 5A to 5C can be similarly applied. However, in the examples of FIGS. 7A to 7C, the first threshold Aₜₕ₁ is an average score Aₐᵥₑ. Aₐᵥₑ is an average value of all detection scores of the first and second detection boundaries Bₖ, Bₖ₋ₙ, Bₖ₋ₙ₊₁, Bₖ₊ₘ₋₁, and Bₖ₊ₘ. In the example of FIG. 7A, since a total value of a first and a second detection score is 1.9 and a number of the first and second detection boundaries is 5, Aₐᵥₑ is 1.9/5=0.38. A figure Dₖ may be calculated in the same way as in FIG. 5B using this first threshold Aₜₕ₁, and a rectangle circumscribing the figure Dₖ may be calculated as a mask region Mₖ.

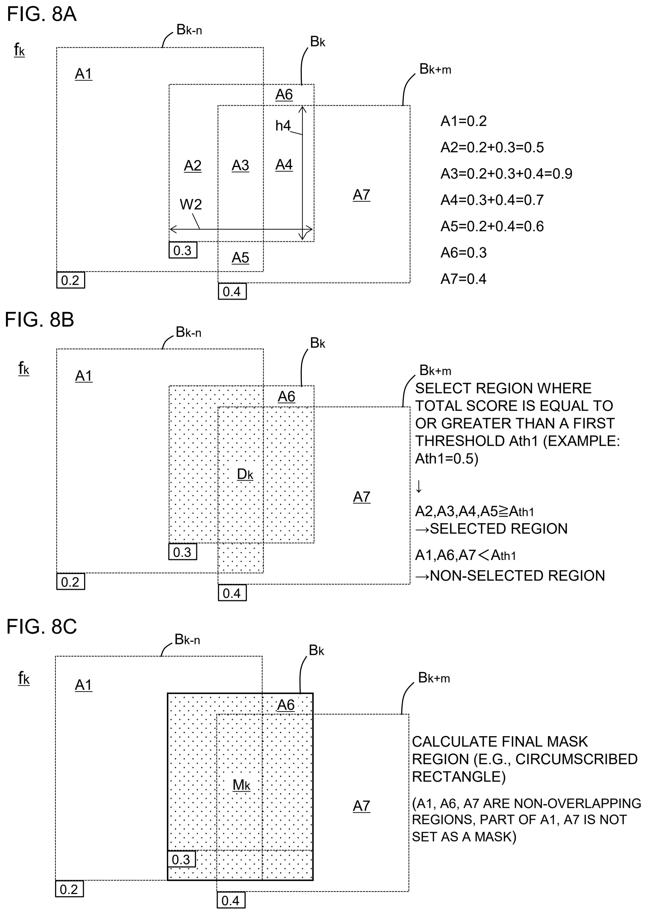

In the examples of FIGS. 8A to 8C, a score of a detection boundary Bₖ₊ₘ is a low score (0.4), and other detection results are the same as in FIGS. 5A to 5C. In the examples of FIGS. 8A to 8C, both a first detection score (0.3) of a first detection boundary Bₖ and a second detection score (0.2, 0.4) of a second detection boundary Bₖ₋ₙ and Bₖ₊ₘ are less than a first threshold Aₜₕ₁ (here, Aₜₕ₁=0.5). In such a case, the mask region calculation unit 11c may calculate a mask region Mₖ of a first frame fₖ so as not to set a mask in at least a part of a non-overlapping region A1, A6, and A7. The non-overlapping regions A1, A6, and A7 are regions inside the first or second detection boundaries Bₖ, Bₖ₋ₙ, and Bₖ₊ₘ, and where the first detection boundary Bₖ and the second detection boundaries Bₖ₋ₙ and Bₖ₊ₘ do not overlap. The non-overlapping regions A1, A6, and A7 are a XOR (exclusive OR) regions of the first and second detection boundaries Bₖ, Bₖ₋ₙ, and Bₖ₊ₘ. In the non-overlapping regions A1, A6, and A7, a detection score is low, and there is no overlap between the detection boundaries. Since the mask priority of the non-overlapping regions A1, A6, and A7 is low, at least a part of the non-overlapping regions A1, A6, and A7 may be set as no-mask, which can suppress the excessive calculation of the mask region Mₖ.

In FIGS. 8A to 8C, since a mask region Mₖ is a circumscribing rectangle of a figure Dₖ, the entire non-overlapping region A6 and a part of the non-overlapping regions A1 and A7 are included in the mask region Mₖ. However, this is an example, and for example, the mask region Mₖ may be an inscribed rectangle of the figure Dₖ. To illustrate how to determine an inscribed rectangle, an inscribed rectangle with a largest area among the inscribed rectangles of the figure Dₖ may be adopted. In the example of FIG. 8A, the largest inscribed rectangle is a rectangle consisting of a height h4 and a width W2. The height h4 is the height of the region A4. The width W2 is the total width of the regions A2, A3, and A4. This largest inscribed rectangle of h4 x W2 may be used as a mask region Mₖ, and in this case, all of the non-overlapping regions A1, A6, and A7 are not set as a mask.

### (1-6-2. Other Operation Example i)

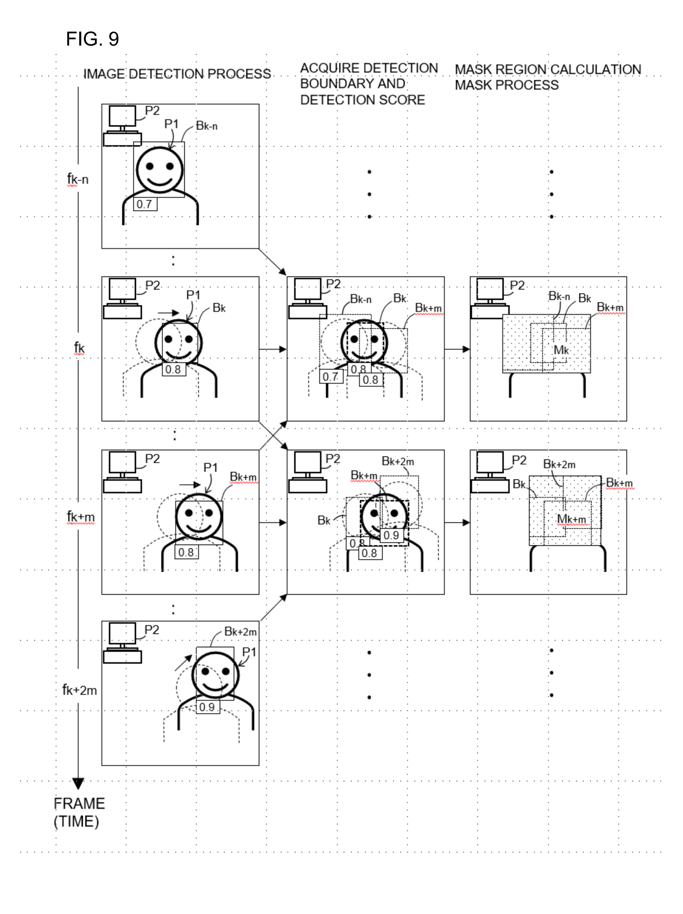

FIG. 9 illustrates a scene different from FIG. 4 in a video R. In the example of FIG. 9, a detection target P1 is closer to an imaging device (a digital video camera) than a non-detection target P2, the entire detection target P1 is always detected in each frame, and a detection score is stable at a high score in each frame fₖ₋ₙ, fₖ, fₖ₊ₘ, and fₖ₊₂ₘ. In the example of FIG. 9, a detection score (0.7, 0.8, 0.8, 0.9) of each detection boundary is equal to or greater than a first threshold Aₜₕ₁ (in this example, Aₜₕ₁=0.5). However, a position and a size of the detection boundary change with a movement of the detection target P1. In such a case, a mask region is calculated as follows by the processing steps S200 to S205 of the first embodiment described above (refer to FIGS. 3, 4, and 5A to 5C).

As an example, a case where a frame fₖ is a first frame will be described. The mask region calculation unit 11c can calculate a mask region Mₖ so that a mask region Mₖ of a detection target P1 in a first frame fₖ is larger in a "an object movement situation" than in an "an object stationary situation" when a first and a second detection score (0.7, 0.8, 0.8) are equal to or greater than a first threshold Aₜₕ₁. Here, an "object stationary situation" is a situation where a position of a detection target P1 is the same between a first and a second frame fₖ, fₖ₋ₙ, and fₖ₊ₘ. In addition, an "object movement situation" is a situation where a position of a detection target P1 is different between the first and second frames fₖ, fₖ₋ₙ, and fₖ₊ₘ. FIG. 9 is an example of the object movement situation.

Assume that a detection target P1 in FIG. 9 remains stationary at a position of a first frame fₖ over the first and second frames fₖ, fₖ₋ₙ, and fₖ₊ₘ. In such an object stationary situation, a detection boundary is substantially constant with a first detection boundary Bₖ, and a detection score also does not substantially change from 0.8, unless there are special situations such as a detection error or a whiteout. Therefore, a mask region Mₖ in this case is substantially the same size as the first detection boundary Bₖ. In contrast, in the object movement situation illustrated in FIG. 9, a second detection boundary Bₖ₋ₙ and Bₖ₊ₘ are generated outside the first detection boundary Bₖ, and as a result, a mask region Mₖ is calculated up to the outside of the first detection boundary Bₖ. In this way, the mask region Mₖ may be calculated to a larger area in the "object movement situation" than in the "object stationary situation."

### (1-6-3. Other Operation Example ii: Inclination Detection by Image Detection Unit)

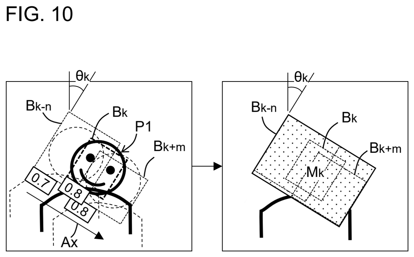

As illustrated in FIG. 10, a detection target P1 may move diagonally within a screen. The image detection unit 11b may generate a detection boundary so as to tilt each detection boundary of the first and second frames at an angle (an angle θₖ in FIG. 10) according to an inclination when the detection target is tilted in an image of the first and second frames (a detection boundary Bₖ₋ₙ, Bₖ, Bₖ₊ₘ in FIG. 10). The mask region calculation unit 11c may tilt a mask region of the image of the first frame according to an inclination of the first and second detection boundaries (a mask region Mₖ in FIG. 10). As an example, in FIG. 10, a first detection boundary Bₖ of a first frame fₖ and a second detection boundary Bₖ₋ₙ and Bₖ₊ₘ of a second frame fₖ₋ₙ and fₖ₊ₘ are tilted by an angle θₖ. In this case, a mask region Mₖ circumscribing the first and second detection boundaries Bₖ, Bₖ₋ₙ, and Bₖ₊ₘ may also be set to be tilted by the same angle θₖ, and the mask region Mₖ may spread diagonally within an image. When there is an error in an angle of inclination between the first and second frames fₖ, fₖ₋ₙ, and fₖ₊ₘ, for example, the inclination of the mask region Mₖ may be determined based on a single angle, and in the example of FIG. 10, the angle θₖ in the first frame fₖ is used as a reference. It becomes possible to calculate a mask region Mₖ for a detection target P1 that moves diagonally on a screen in a video as much as possible without excess or deficiency.

### (1-6-4. Processing Based Only on Detection Result of Second Frame)

In the first embodiment, as an example, an arithmetic process using a detection result of both a first and a second frame (refer to S200 to S205, FIGS. 3 to 5C, and FIGS. 7A to 10) was described, but this is an example. As another example, a mask region calculation process in a step S202 may be performed based on a detection result of only a second frame (a detection boundary and a detection score) without using a detection result of a first frame (that is, omitting a S200 of FIG. 3). As still another example, when there are detection results of both a first and a second frame, a process based on both detection results is performed, but on the other hand, when there is no detection result in the first frame, a mask region may be calculated based on a detection result of only a second frame (a detection boundary and a detection score), and for example, a case-dividing process may be performed in a step S202. As an example of a scene where these processes can be used, when a whiteout occurs in a first frame fₖ, there is a possibility that an image detection unit 11b fails to recognize an image of a detection target P1 in the image of the first frame fₖ. As another example, a case where an image detection error (a face recognition failure) occurs, or a case where "a detection score in a first frame is less than a threshold when a detection score equal to or greater than a certain threshold and a detection boundary associated with it are adopted" can also be assumed, and in these cases, a detection boundary and a detection score may not exist in the image of the first frame fₖ. In any scene, by using a detection result of a second frame fₖ₋ₙ and fₖ₊ₘ (including a detection score), the mask region calculation unit 11c can calculate a mask region Mₖ in the vicinity of a detection target P1. This modification can be similarly adopted in a second embodiment described later.

### <2. Second Embodiment>

In a second embodiment, differences from a first embodiment will be mainly described, and a description of matters that are common to or similar to the first embodiment will be omitted or simplified.

### (2-1. Functional Block Configuration of Control Unit 11)

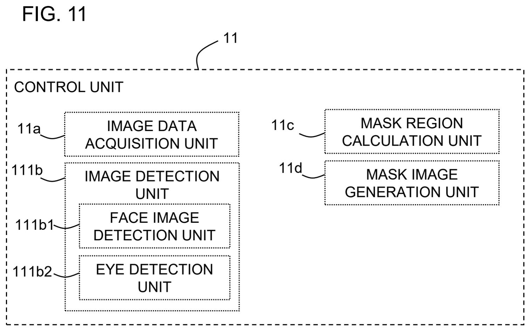

As shown in FIGS. 11A and 11B, a control unit 11 of a second embodiment includes an image detection unit 111b. This is provided in place of the image detection unit 11b of the first embodiment. In this respect, the second embodiment differs from the first embodiment. The image detection unit 111b includes a face image detection unit 111b1 and an eye detection unit 111b2. Since the face image detection unit 111b1 and the eye detection unit 111b2 can also arbitrarily adopt various known image detection techniques like the image detection unit 11b, a detailed description thereof will be omitted.

### (2-2. Processing Operation of Second Embodiment)

A processing flow of the second embodiment has many points in common with a processing flow of the first embodiment (refer to FIG. 3), but there are some differences in an image detection process S101 and a mask region calculation process S202. Other than that, the process is basically the same as or can be diverted from the first embodiment, so the description will be omitted or simplified as necessary.

### (2-2-1. Outline of Eye Detection Region and Eye Detection Score)

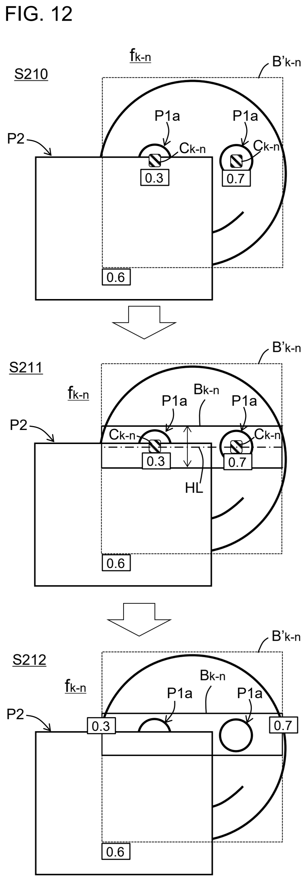

In a second embodiment, first, an image detection unit 111b executes a process similar to S100 to S102 of FIG. 3. With reference to FIG. 12 and the like, a description of an image detection process (corresponding to S101) according to the second embodiment will be given. In FIG. 12, as an example, an image of a frame fₖ₋ₙ is a processing target.

In an image detection process (S101), an eye detection unit 111b2 detects an eye in the image of a frame fₖ₋ₙ (refer to a detection target P1a), and associates an eye detection region Cₖ₋ₙ with the image of the frame fₖ₋ₙ. In the second embodiment, a detection boundary Bₖ₋ₙ is set so as to surround the eye detection region Cₖ₋ₙ. As an example, an eye detection region Cₖ₋ₙ may be set as a point (a point of an image coordinate) in an image. As another example, the eye detection region Cₖ₋ₙ may cover a part or a whole of each eye in an image. At least one eye detection region Cₖ₋ₙ is set. When a face is generally facing forward, two eyes are usually detected unless they are hidden by an obstacle. In a case where a face is facing diagonally or is hidden by an obstacle, a single eye may be detected. In the example of FIG. 12, the eye detection unit 1112b is set such that a single detection boundary Bₖ₋ₙ surrounds both of two eye detection regions Cₖ₋ₙ.

In the second embodiment, as an example, as in a step S210 of FIG. 12, first, a face image detection unit 111b1 detects a face in an image to set a detection boundary B'ₖ₋ₙ, and then an eye detection unit 111b2 detects an eye (that is, a detection target P1a) inside the detection boundary B'ₖ₋ₙ. The eye detection unit 111b2 sets an eye detection region Cₖ₋ₙ for each detection target P1a and associates a detection score (0.3, 0.7) with each eye detection region. Next, in a step S211, the eye detection unit 111b2 defines a horizontal axis HL by connecting the centers of the two eye detection regions Cₖ₋ₙ with a straight line. Furthermore, two horizontal straight lines separated by a predetermined width in a vertical direction are set with the horizontal axis HL as a starting point (refer to a vertical double-headed arrow of a S211). In the second embodiment, as an example, a rectangle surrounded by these two horizontal straight lines and a face detection boundary B'ₖ₋ₙ is treated as a "detection boundary Bₖ₋ₙ". As another example, an inner region of the rectangle can be treated as a "detection region Bₖ₋ₙ". Note that there is an advantage that an eye detection accuracy is higher than a direct eye detection by performing an eye detection after a face detection. However, the present invention is not limited to this, and an eye detection region may be directly set without performing a face detection (that is, setting a face detection boundary B'ₖ₋ₙ).

### (2-2-2. First Example: Detection Score Setting by Interpolation, etc., and Mask Region Calculation)

In a first example, an eye detection unit 111b2 sets a detection score of a detection boundary Bₖ₋ₙ based on a detection score (0.3, 0.7) of each eye detection region Cₖ₋ₙ. Please refer to a step S212 of FIG. 12 here. The eye detection unit 111b2 associates a detection score 0.3 with a first end of the horizontal both ends of the detection boundary Bₖ₋ₙ. The first end is an end on a side closer to an eye detection region Cₖ₋ₙ with a detection score 0.3. The eye detection unit 111b2 associates a detection score 0.7 with a second end of the horizontal both ends of the detection boundary Bₖ₋ₙ. The second end is an end on a side closer to an eye detection region Cₖ₋ₙ with a detection score 0.7. In the first example, a detection score is set at both ends of the detection boundary according to a positional relationship with the eye detection region Cₖ₋ₙ in this way.

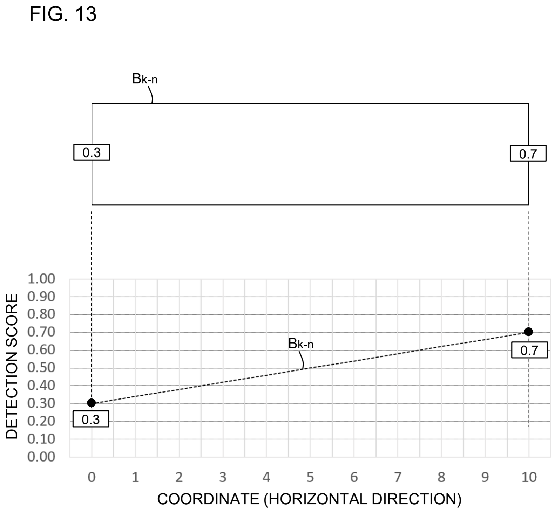

Next, please refer to FIG. 13. The eye detection unit 111b2 linearly interpolates a detection score from a detection score 0.3 of a first end to a detection score 0.7 of a second end in an inner region of a detection boundary Bₖ₋ₙ, thereby setting a sloped (so to speak, a gradation-like) detection score in the inner region of the detection boundary Bₖ₋ₙ. A graph on a lower side of FIG. 13 shows a distribution of a detection score when a horizontal coordinate is represented by a numerical value 0 to 10 for convenience. By doing so, the eye detection unit 111b2 sets a detection score of an inner region of a detection boundary Bₖ₋ₙ based on eye detection scores 0.3 and 0.7. The eye detection unit 111b2 can set a detection score in the inner region of the detection boundary Bₖ₋ₙ according to a positional relationship with the eye detection region Cₖ₋ₙ. By a similar process, a detection score of each inner region of another detection boundary Bₖ and Bₖ₊ₘ can also be set.

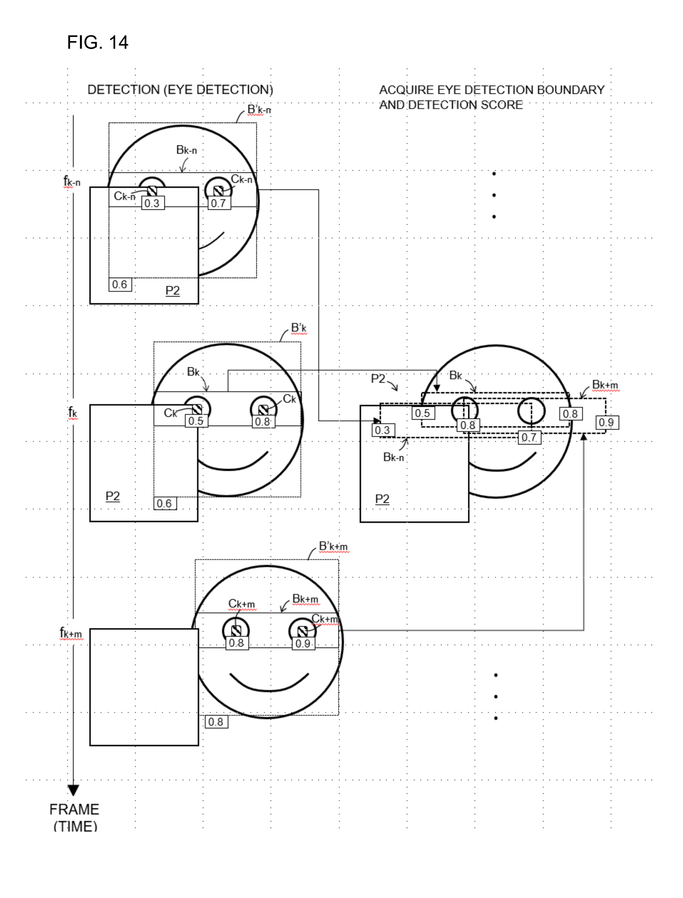

Next, a first example of a process (corresponding to S200 to S205 of FIG. 3) of a mask region calculation unit 11c of a second embodiment will be described with reference to FIG. 14. In FIG. 14, a frame fₖ is assumed to be a first frame, and a frame fₖ₋ₙ and a frame fₖ₊ₘ are assumed to be a second frames. The mask region calculation unit 11c acquires a detection result of an image detection process for each image of a first and a second frame fₖ, fₖ₋ₙ, and fₖ₊ₘ in a video R in a single mask region calculation process. This detection result includes an inner region of a first detection boundary Bₖ and a detection score (linear interpolation of 0.5 to 0.8), an inner region of a second detection boundary Bₖ₋ₙ and a detection score (linear interpolation of 0.3 to 0.7), and an inner region of a second detection boundary Bₖ₊ₘ and a detection score (linear interpolation of 0.8 to 0.9).

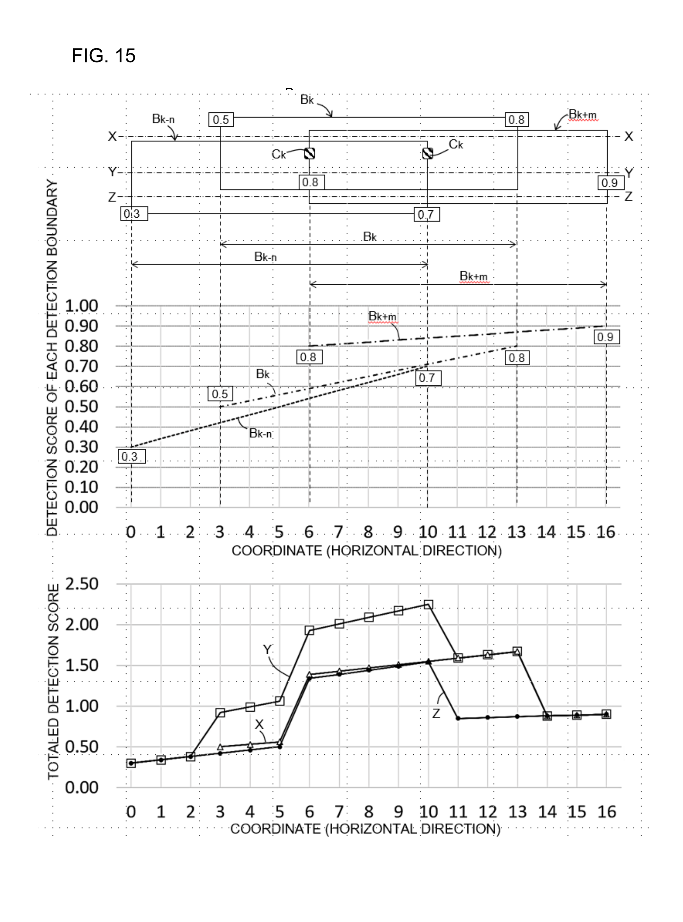

Next, please refer to FIG. 15. In a top part of FIG. 15, a first and a second detection boundary Bₖ, Bₖ₋ₙ, and Bₖ₊ₘ superimposed on an image of a first frame fₖ are illustrated. A graph in a middle part of FIG. 15 represents a detection score distribution (both are linearly interpolated) in an inner region of each of the first and second detection boundaries Bₖ, Bₖ₋ₙ, and Bₖ₊ₘ. A bottom part of FIG. 15 shows an example of a result of combining a detection score when the first and second detection boundaries Bₖ, Bₖ₋ₙ, and Bₖ₊ₘ are superimposed. As an example, a score combination may simply add a score of an inner region of a detection boundary according to an overlap of the detection boundaries. A detection score distribution along an X-X line, a Y-Y line, and a Z-Z line in a top part of FIG. 15 is listed in a graph in a bottom part of FIG. 15.

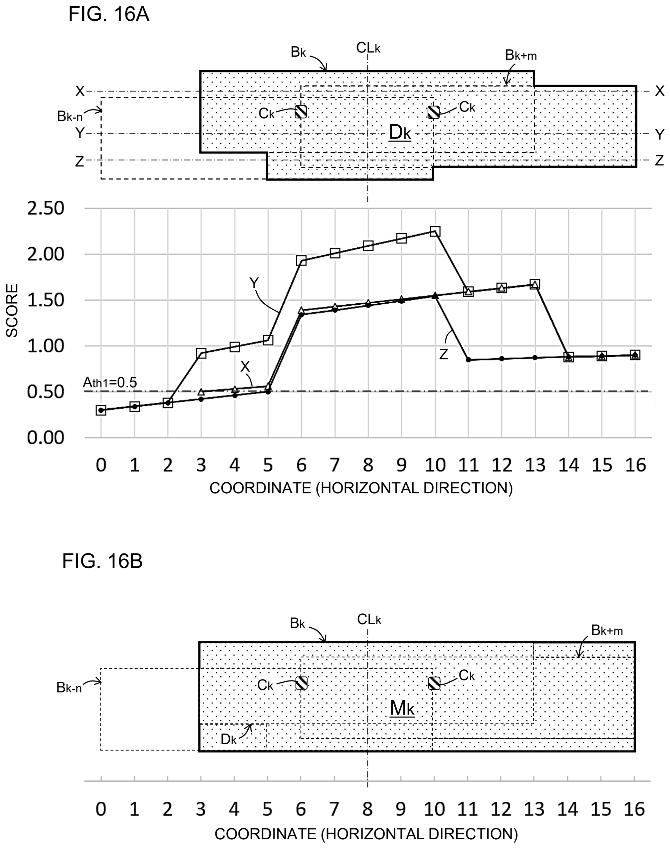

A top part of FIG. 16A is an example of a figure Dₖ in a first example. A first threshold Aₜₕ₁ (in this example, Aₜₕ₁=0.5) is entered in a graph on a lower part of FIG. 16A. As an example, the mask region calculation unit 11c adopts an area with a detection score of Aₜₕ₁ or higher as a figure Dₖ. Furthermore, as shown in FIG. 16B, as an example, the mask region calculation unit 11c calculates a circumscribing rectangle of the figure Dₖ as a mask region Mk. For a processing content regarding the other figure Dₖ and the mask region Mₖ, please refer to the first embodiment (S202, a description of FIGS. 4 and 5, and the like). A process after calculating a mask region is the same as that of the first embodiment (refer to FIG. 3 and the like), so a description will be omitted.

In the first example, a detection score is set at both ends of a detection boundary based on an eye detection score. However, this is just an example. For example, a detection score corresponding to a value of an eye detection score may be set at a horizontal coordinate position corresponding to an eye detection region. For example, it is assumed that an eye detection region Cₖ₋ₙ with a low score of 0.3 is located at a coordinate "3" and an eye detection region Cₖ₋ₙ with a high score of 0.7 is located at a coordinate "7" in a detection boundary Bₖ₋ₙ. In this case, in a graph (refer to FIG. 13 or FIG. 15) in which a coordinate is a first axis and a detection score is a second axis, a detection score 0.3 is set at a position of a coordinate 3, and a detection score 0.7 is set at a position of a coordinate 7, and a function passing through these two points (for example, a linear function) may be calculated, and a detection score that changes according to the function may be set in an inner region of a detection boundary Bₖ₋ₙ. In this case, a detection score inside the two points is calculated by an interpolation (an inner interpolation), and a detection score outside the two points is calculated by an extrapolation (an outer interpolation).

There are also various variations in a calculation method such as an interpolation. For example, in the first example, a detection score that changes according to a linear function according to a horizontal coordinate was set in an inner region of a detection boundary by linearly interpolating a detection score at both ends of the detection boundary. A horizontal direction here is a longitudinal direction of a detection boundary, that is, a direction in which two eyes are arranged. However, this is just an example. A detection score may be changed, for example, in a stepwise or a curved manner, and may be changed continuously or discontinuously according to a horizontal coordinate of a detection boundary. A detection score distribution may be a monotonic change (that is, a monotonic increase or a monotonic decrease) from one end to the other end of a detection boundary, but is not limited to this. For example, a detection score distribution that has a maximum value at a coordinate position of an eye detection region and decreases around it may be adopted.

### (2-2-3. Second Example: Detection Score Setting by Region Division, and Mask Region Calculation)

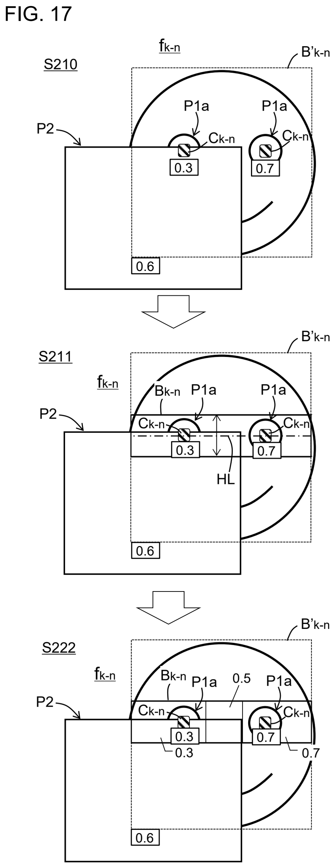

A second example will be described with reference to FIGS. 17 to 19B. As a second example, an eye detection unit 111b2 may divide a detection boundary Bₖ₋ₙ into a plurality of regions (refer to a S222 of FIG. 17). A detection boundary Bₖ₋ₙ may be divided into a plurality of regions, and a different detection score may be associated with each region.

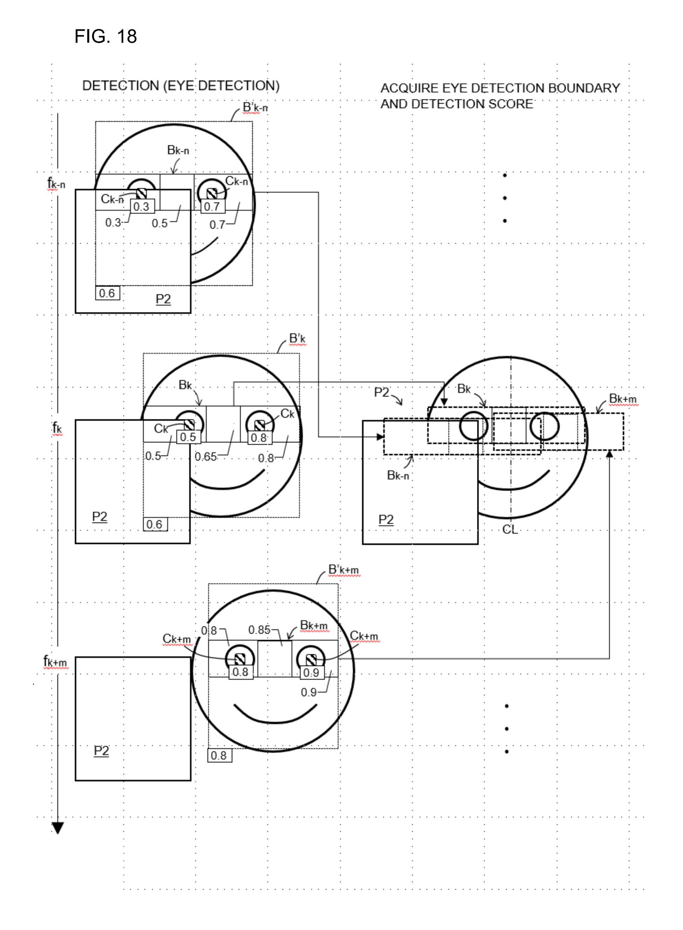

Specifically, the eye detection unit 111b2 may divide the detection boundary Bₖ₋ₙ into an end region including each eye detection region Cₖ₋ₙ and a middle region not including the eye detection region Cₖ₋ₙ. One of the end regions (a left side of a paper surface of FIG. 18) includes an eye detection region Cₖ₋ₙ with an eye detection score 0.3. Therefore, a detection score based on the eye detection score 0.3 is associated with one of the end regions (a left side of a paper surface of FIG. 18) (in this example, 0.3 is adopted as it is). Similarly, a detection score based on the eye detection score 0.7 is also associated with the other of the end regions (a right side of a paper surface of FIG. 18) (in this example, 0.7 is adopted as it is). The middle region is set between the two eye detection regions Cₖ₋ₙ, and as an example, an average value of a detection score of an end region (that is, 0.5) is associated with it.

Such a process of the eye detection unit 111b2 may be performed on all frame images of a video R. The detection result is stored in a detection information DB 12b (refer to a step S102 of FIG. 3).

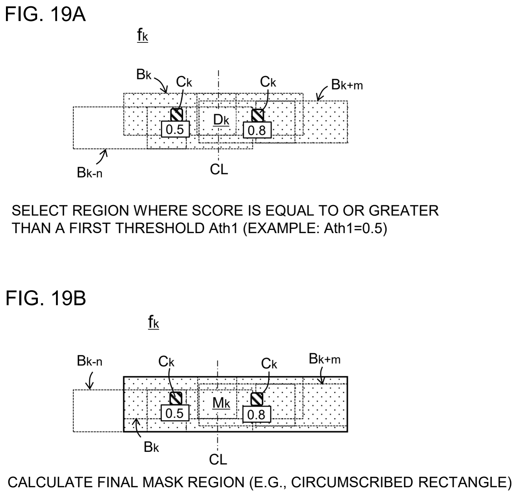

Next, a second example of a process (corresponding to S200 to S205 of FIG. 3) of a mask region calculation unit 11c of a second embodiment will be described with reference to FIG. 18. In FIG. 18, as in FIG. 14, it is assumed that a frame fₖ is a first frame, and a frame fₖ₋ₙ and a frame fₖ₊ₘ are a second frames. In a second example, the mask region calculation unit 11c acquires a detection result of an image detection process for each image of a first and a second frame fₖ, fₖ₋ₙ, and fₖ₊ₘ in a video R in a single mask region calculation process. This detection result includes each region of a first detection boundary Bₖ and a detection score (0.5, 0.65, 0.8), each region of a second detection boundary Bₖ₋ₙ and a detection score (0.3, 0.5, 0.7), and each region of a second detection boundary Bₖ₊ₘ and a detection score (0.8, 0.85, 0.9). The mask region calculation unit 11c calculates a figure Dₖ (refer to FIG. 19A) and a mask region Mₖ (refer to FIG. 19B) based on the first and second detection boundaries Bₖ, Bₖ₋ₙ, and Bₖ₊ₘ, which have a plurality of regions, and a detection score set in each region. The figure Dₖ and the mask region Mₖ can be calculated in the same way as in the first embodiment (refer to S202, a description of FIGS. 4 and 5, and the like).

According to the second example, an eye detection unit 111b2 associates a first and a second detection boundary Bₖ, Bₖ₋ₙ, and Bₖ₊ₘ with each image of a first and a second frame fₖ, fₖ₋ₙ, and fₖ₊ₘ, respectively, divides an inner region of each of the first and second detection boundaries Bₖ, Bₖ₋ₙ, and Bₖ₊ₘ into a plurality of regions (a an end region and a middle region), sets a detection score of the end region including an eye detection score based on the eye detection score, and can set a detection score of the middle region not including the eye detection region Cₖ based on the detection score of the end region including the eye detection region Cₖ. Since a score difference of an eye detection region of the same face detection boundary can be included, a mask region for masking an eye can be calculated with high accuracy.

In the second example, a number of divisions of an inner region of a detection boundary is not limited. A middle region may be divided into an arbitrary number of pieces, and a large number of a middle regions may be set. An end region may be divided, and a first end region including an eye detection region and a second end region not including an outer eye detection region may be set, and the second end region may be further divided. A number of divisions of a middle region and/or a second end region may be large. Specifically, the number of divisions of a middle region is, for example, 2, 3, 4, 5, 6, 7, 8, 9, 10, 11, 12, 13, 14, 15, 16, 17, 18, 19, or 20, and may be within a range between any two of the numerical values illustrated here. This number of divisions can be similarly adopted for a second end region. Although it depends on a resolution, a width of each divided region may be a minute width that is close to a pixel width to some extent (for example, 10 times or less, 50 times or less, 100 times or less, or 200 times or less of a pixel width). As an example, a detection score of each region when a middle region is divided into a plurality of regions may be changed in a stepwise manner from one end to the other end of the middle region. In this stepwise change, an eye detection score of an eye detection region on one end side may be a start value and an eye detection score of an eye detection region on the other end side may be a final value. It may be a monotonic change between two eye detection scores. A detection score of each region when a second end region is divided into a plurality of regions may also be increased or decreased in a stepwise manner as it moves away from an eye detection region.

### (2-2-4. Summary of Processing Operation)

As described above, an image processing system 1 of a second embodiment further includes an eye detection unit 111b2 for executing an image detection process. The eye detection unit 111 b2 sets an eye detection score for an eye detection region Cₖ, Cₖ₋ₙ, and Cₖ₊ₘ. The eye detection unit 111b2 sets a detection score of an inner region of a detection boundary Bₖ, Bₖ₋ₙ, and Bₖ₊ₘ based on an eye detection score (refer to FIG. 13 or FIG. 17). The detection score may be set according to a positional relationship with the eye detection region Cₖ, Cₖ₋ₙ, and Cₖ₊ₘ, and specifically, at least a first example (an interpolation in FIG. 13, etc.) and a second example (a region division in FIG. 17) may be adopted.

One of the features of a processing operation of a second embodiment will be given. In the second embodiment, both eyes are detected in a face included in all images of a first and a second frame fₖ, fₖ₋ₙ, and fₖ₊ₘ, and an eye detection region and a detection score are set for each of the both eyes. For example, in FIG. 14, an eye detection score of a frame fₖ₋ₙ is 0.3 for a right eye and 0.7 for a left eye, and each eye detection score of an eye detection region associated with the left eye is higher than that of the right eye. A similar magnitude relationship holds for the frames fₖ and fₖ₊ₘ. In this case, the mask region calculation unit 11c can calculate a mask region Mₖ of a first frame fₖ so that a mask is generated larger on a side of a left eye's eye detection region than on a side of a right eye's eye detection region (refer to FIG. 16B). Conversely to the above, when the right eye has a higher detection score of the both eyes, a larger mask can be generated on the right eye side. "The side of a higher-detection-score eye detection region" can be defined, for example, as follows. A perpendicular bisector of a virtual straight line connecting two eye detection regions Cₖ is a virtual central axis CLₖ (refer to FIGS. 16A, 18, and 19B). The side of the high-score eye detection region Cₖ with the virtual central axis CLₖ as a boundary may be "the side of the higher-eye-detection-score eye detection region." The mask region Mₖ may be calculated so that the eye detection region Cₖ on the higher score side becomes a mask region with a larger area than the eye detection region Cₖ on the lower score side, with the virtual central axis CLₖ as a boundary.

### (2-3. Modifications of Second Embodiment, etc.)

A method for setting a detection boundary so as to surround an eye is an example, and as another example, a detection boundary with a predetermined aspect ratio surrounding an eye detection region may be set so as to cover the eye detection region. In addition, a face detection boundary B'ₖ may be omitted (that is, only an eye detection process may be performed without performing a face image detection), and in this case as well, a detection boundary may be set based on an eye detection region.

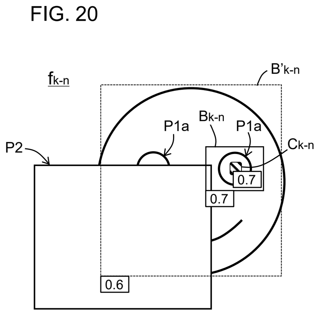

For example, a case where a side face is detected, or a case where a single eye is shielded by a hand or the like and is not visible in a video may occur. The eye detection unit 111b2 may set a detection score of an inner region of each detection boundary Bₖ₋ₙ, Bₖ, and Bₖ₊ₘ according to a rule (c) or (d) below. First, a rule (c) will be described. In the example of FIG. 12, both eyes (two detection targets P1a) are detected in an image of a frame fₖ₋ₙ, and an eye detection score (0.7) equal to or greater than a second threshold Aₜₕ₂ is set only for an eye detection region Cₖ₋ₙ of one eye (a left eye) (as an example, Aₜₕ₂=0.5). In such a case, as a rule (c), a detection boundary Bₖ₋ₙ may surround an eye detection region Cₖ₋ₙ of one eye (a left eye) and not surround an eye detection region Cₖ₋ₙ of the other eye (a right eye), and a detection score of the detection boundary Bₖ₋ₙ may be 0.7 (refer to FIG. 20). Next, a rule (d) will be described. For example, in a single face detection boundary B'ₖ₋ₙ of FIG. 12, an eye detection region of a single eye (for example, a right eye) may not be generated due to a detection error or a very low detection score of an eye detection region Cₖ₋ₙ. In such a case, as a rule (d), a detection score 0.7 may be set in an inner region of a detection boundary Bₖ₋ₙ that detected a single eye, as in the above (refer to FIG. 20). Note that a predetermined increase correction or decrease correction may be performed on 0.7. In a rule (c) or (d), a detection score may be uniform in an inner region of a detection boundary. The second threshold Aₜₕ₂ may be the same as the first threshold Aₜₕ₁.

Not limited to these, the second embodiment can be variously modified. Various contents described in a modification of the first embodiment can be adopted in the second embodiment (for example, refer to "1-6. Modifications, etc." of the first embodiment).

### <3. Other Modifications, etc.>

### (3-1. Variations of Image Detection Process)

An image detection process of the image detection unit 11b may not be an object detection process, but may be a region detection process. A region detection process can adopt an arbitrary known technique, for example, a region detection process such as a rule-based one may be adopted, or for example, a machine inference (for example, a so-called image segmentation) using a learned region detection model may be adopted. In some region detection processes, a pixel of an image can be classified according to which an object class it belongs to. For example, in a region detection process, a set of a pixel group of a detection target (for example, a face) may be given as a detection region. For example, a pixel group with a detection score equal to or greater than a certain threshold may be configured, a process such as a filling of a missing region may be performed on the pixel group, and thereby a detection region may be set. An outline of a detection region (that is, a boundary line that defines an inside and an outside of a detection region) can be treated in the same way as a detection boundary. A "detection score of a detection region" can be determined by an arbitrary calculation method, and may be determined based on, for example, a detection score of each pixel included in the detection region. As an example, a pixel group with a detection score equal to or greater than a certain threshold is defined, a "statistical value" is calculated from a detection score of all pixels included in the pixel group, and a detection score of a detection region may be set based on the statistical value. This statistical value may be, for example, an average value, a median value, or a mode value based on a detection score of each pixel.

As described above, the image detection unit 11b may perform a region detection process, and a detection result (a detection region and a detection score) of the region detection process may be replaced with a detection result (a detection boundary and a detection score) described in the first and second embodiments and their respective modifications. As a modification, for example, a first detection region may be associated with an image of a first frame instead of a first detection boundary, and a first detection score may be set for the first detection region. For example, a second detection region may be associated with an image of a second frame instead of a second detection boundary, and a second detection score may be set for the second detection region. For example, a non-overlapping region illustrated in FIG. 8C may be a region inside a first or a second detection region and where the first detection region and the second detection region do not overlap, as a modification. Instead of a detection boundary Bₖ₋ₙ, for example, a detection region may be set so as to overlap an eye detection region Cₖ₋ₙ, or a rectangular detection region that occupies a position and a range similar to the detection boundary Bₖ₋ₙ may be set. Similarly, a detection region can be applied to a single eye detection (an example of FIG. 20) of a rule (c) or (d).

### (3-2. Use, Detection Target, etc.)

There are no limitations on a content of a video R and a mask target in an image processing system 1 according to a first and a second embodiment. The video R may be, for example, a medical video (for example, a surgical video, a treatment video, a medical examination video, a diagnostic video), a commercial video, an industrial video (a factory image, a manufacturing process image), a streaming delivery via the Internet or the like, a security camera video, an in-house or an external meeting video, or an interview video.

### (3-2-1. Application to Streaming Delivery Video, etc.)

The image processing system 1 of the first and second embodiments can generate a masked video RM by performing a mask process on a recorded video R. However, the present invention is not limited to this, and can also be used for a mask process of a streaming delivery video or the like. When a future frame is adopted as a second frame rather than a first frame, at least an m-frame shift is required to generate a masked video RM from a video R. For this reason, a delivery video (a masked video RM) requires a delay of m frames or more with respect to a shot video (a video R), but the delay can be suppressed to a desired range by not making the value of m too large. Note that variations in a numerical value of n and m and a frame rate will be described later.

### (3-2-2. Detection Target, Mask Target, etc.)

In an image detection process (an object detection or a region detection) of an embodiment and a modification, as an example, a person's face (the first embodiment) or an eye (the second embodiment) is a mask target. However, the present invention is not limited to this, and a detection target and a mask target can be arbitrarily set. A position, a size, and a range of a detection boundary Bₖ and the like can be arbitrarily set according to each detection target, and the same applies to a modification that adopts a detection region. For example, a detection target and a mask target may be an image of a tangible object, or an image of a visible matter other than a tangible object. The tangible object may be, for example, a human or an animal's face, an individual eye, both eyes and their surroundings, an upper body, or an organ, and may be, for example, an arbitrary commercial product or an industrial product, or for example, a factory equipment, a manufacturing equipment, or the like. Visible matters other than a tangible object may be, for example, a symbol, a diagram, an illustration, and the like. A symbol includes an arbitrary character symbol such as a kana character, a kanji, a number, and an alphabet. Any tangible object and/or symbol that can identify a personal information, a confidential information, and/or a secret information may be a detection target. In a medical video or the like, a face and/or a name of a patient, a doctor, or a medical staff may be masked, and a character information of a manufacturer name or a model number of a medical device or a pharmaceutical product may be masked.

Note that a type of a mask is not limited to a mosaic process or the like, and may be any type as long as a calculated mask region can be masked. A mask can be arbitrarily set according to a use or the like, and may be an arbitrary illustration image (for example, a character image such as an avatar image, or an eye illustration image).

### (3-3. Type and Number of Second Frames)

A second frame may be a frame separated from a first frame by a predetermined number (n or m mentioned above), but is not limited to this, and may be a frame continuous with the first frame. In addition, the predetermined numbers n and m are an arbitrary natural numbers, and n and m may be the same, but are not limited to this, and may be different, and either n>m or n<m may be used. A value of n is, for example, 1 to 120, and may be, for example, 1 to 60. Specifically, the value of n may be, for example, 1, 2, 3, 4, 5, 6, 7, 8, 9, 10, 15, 20, 25, 30, 40, 50, 60, 70, 80, 90, 100, 110, or 120, and may be within a range between any two of the values illustrated here. A value of m is, for example, 1 to 120, and may be, for example, 1 to 60. Specifically, the value of m may be, for example, 1, 2, 3, 4, 5, 6, 7, 8, 9, 10, 15, 20, 25, 30, 40, 50, 60, 70, 80, 90, 100, 110, or 120, and may be within a range between any two of the values illustrated here. A value of n and m may be set according to a frame rate.

There is no limitation on a frame rate of a video R processed by an image processing system 1. The frame rate is set variously depending on an application of the video. A frame rate of the video R may be 1, 2, 3, 4, 5, 6, 7, 8, 9, 10, 15, 20, 21, 22, 23, 24, 25, 30, 40, 50, 60, 70, 80, 90, 100, 110, 120, 150, 200, or 240 fps, and may be within a range between any two of the fps values exemplified herein. A frame rate standard of the video R may be, for example, a NTSC system, a PAL system, or another system. In the NTSC system, the frame rate is selectable from 60 fps, 59.94 fps, 30 fps, 29.97 fps, and 24 fps. In the PAL system, the frame rate is selectable from 50 fps, 25 fps, and 24 fps. In a movie, the frame rates of 60 fps, 24 fps, and 25 fps are mainly adopted. The frame rate of the video R may be any one of the fps values exemplified herein, and may be within a range between any two of the exemplified fps values. As the frame rate becomes larger (that is, as the number of frames per second increases), a time interval between the respective frames becomes shorter, so when the frame rate is large, a value of the above n or m may be set to be larger.

In a first and a second embodiment, a second frame includes both a past frame and a future frame relative to a first frame (for example, a second frame fₖ₋ₙ and fₖ₊ₘ in a case of a first frame fₖ). However, this is an example. The second frame may be only one of a future frame and a past frame. That is, the second frame may be only one or more frames past to the first frame, or the second frame may be only one or more frames future to the first frame. The "plurality of frames" described herein may be, as an example, frames discontinuously extracted from each other on a time axis (that is, frames separated from each other on the time axis). As another example, the second frame may include a plurality of consecutive frames past to the first frame, and/or may include a plurality of consecutive frames future to the first frame.

There is no limitation on a number of the second frames. Specifically, the number of the second frames may be, for example, 1, 2, 3, 4, 5, 6, 7, 8, 9, 10, 15, 20, 25, 30, 40, 50, 60, 70, 80, 90, 100, 110, or 120, or may be within a range between any two of those exemplified herein. The second frame may be one. In this case, the second frame can adopt one of a frame past to the first frame and a frame future to the first frame.

### (3-4. Detection boundary, detection region, etc., figure for calculation, and modifications such as mask region calculation)

In the first and the second embodiments, the following process is performed as an example. First, a control unit 11 (an image detection unit 11b, 111b and a mask region calculation unit 11c) performs region selection based on a detection score and a first threshold Aₜₕ₁ by overlapping a first and a second detection boundary as an example (see FIG. 5A, FIG. 7A, FIG. 8A, FIG. 15, or FIG. 19A). Specifically, the control unit 11 sets a region having a total score of the first threshold Aₜₕ₁ or more as a selected region as an example. The control unit 11 sets an outer peripheral figure of this selected region as a figure Dₖ (for example, see Dₖ in FIG. 5B, FIG. 7B, FIG. 8B, FIG. 16A and/or FIG. 19A). The control unit 11 further sets a circumscribed rectangle of this figure Dₖ as a final mask region Mₖ (for example, see Mₖ in FIG. 5C, FIG. 7C, FIG. 8C, FIG. 16B, or FIG. 19B). However, these processes are an example, and the present invention is not limited to this.

A figure for mask region calculation (see the figure Dₖ) has various variations. For example, the figure for calculation may be one in which "an outer peripheral figure of a selected region" is offset inward or outward. The figure for calculation may be a closed region in which each vertex of "the outer peripheral figure of the selected region" is connected by a straight line or a curve. Even if a plurality of detection boundaries are separated from each other in a screen and do not overlap with each other, the figure for calculation may be set as follows. For example, the figure for calculation may be an arbitrary figure that extends over the plurality of detection boundaries while circumscribing the plurality of separated detection boundaries with at least one point or one side. As another example, the figure for calculation may be an arbitrary figure that extends over the plurality of detection boundaries while covering a part, a majority part, or a whole of the plurality of separated detection boundaries. The figure Dₖ may be a geometrical shape. These modifications can also be adopted in a case where "a detection region" by a region detection process is used instead of "a detection boundary".

A first threshold Aₜₕ₁ is used for region selection when determining a figure to be used for calculation of a mask region. In the first and the second embodiments, 0.38 and 0.5 are exemplified as the first threshold Aₜₕ₁ (see FIG. 5B, FIG. 7B, FIG. 8B, and FIG. 19A), but the present invention is not limited to these values. A second threshold Aₜₕ₂ is also not limited to 0.5. For example, in a case where a detection score of a single detection boundary or an eye detection score of a single eye detection region is set within a range of 0 to 1.0, the first threshold Aₜₕ₁ or the second threshold Aₜₕ₂ may be, for example, 0.1 to 0.9, or may be, for example, 0.3 to 0.7. Specifically, the first threshold Aₜₕ₁ or the second threshold Aₜₕ₂ may be, for example, 0.1, 0.2, 0.3, 0.4, 0.5, 0.6, 0.7, 0.8, or 0.9, and may be within a range between any two of those exemplified herein.

The shape and the like of a mask region have various variations. As described in the first and the second embodiments and their modifications, the mask region may be an arbitrary figure that circumscribes or inscribes an outer periphery of a figure for mask region calculation. By doing so, there is an advantage that the mask region can be a neat shape. However, the present invention is not limited to this. For example, the mask region may be set to a same shape as the figure for calculation. Alternatively, the mask region may be an arbitrary figure that covers a part, a majority part, or a whole of the figure for calculation. This arbitrary figure may be an arbitrary polygon (for example, any polygon of a triangle or more, and is not limited to a regular polygon), a polygon in which all vertices or a part of the vertices of the figure for calculation are connected by a straight line, a circle or an ellipse, or an arbitrary closed curve (a curve passing through all or some vertices of the figure for mask region calculation).

As described in FIGS. 5A to 5C, a detection score of an overlapping region (A2 to A5) of a first and a second detection boundary may be calculated by summing up each detection score of the first and the second detection boundary as in the first and the second embodiments. The term "sum" is not limited to simple addition, but is intended to be a broader concept, and includes various calculation methods for computing a plurality of detection scores with various rules. For example, in a case where there is an overlapping region (for example, A2 to A5) and a non-overlapping region (for example, A1, A6, A7) of the first and the second detection boundary, a total detection score of the overlapping region may be calculated to be higher than each detection score of the non-overlapping region, and such an arbitrary score calculation may be adopted. For example, in the overlapping region, an arbitrary summary statistic (for example, a mean value, a maximum value, a median value, or a minimum value) may be calculated from the plurality of detection scores and adopted as a detection score of the overlapping region. Alternatively, as the number of overlapping detection boundaries in the overlapping region is larger, and/or as an overlapping area is larger, the detection score of the overlapping region may be calculated to be relatively larger.

In the first embodiment, all second detection boundaries of a second frame are adopted for mask region calculation on an image of a first frame. However, the present invention is not limited to this. As one of modifications, a detection boundary whose second detection score is less than a first threshold Aₜₕ₁ among the plurality of second detection boundaries may not be adopted, and a mask region may be calculated based on a first detection boundary and the adopted second detection boundary after adopting only the second detection boundary of the first threshold Aₜₕ₁ or more.

A first and a second detection boundary are not limited to a rectangular frame, but may be a frame of an arbitrary polygon, a circular frame, an elliptical frame, or another closed curve frame. The polygon is not limited to a regular polygon, and may have an arbitrary uneven shape.

In the second embodiment, a first and a second detection boundary are each divided into a plurality of regions, but this technical idea can also be applied to the first embodiment. However, in the second embodiment, division is performed based on an eye detection region, but the first embodiment does not have an eye detection region. A method of region division can be arbitrarily set, but for example, as one of modifications of the first embodiment, an inner region of each of the first and the second detection boundary may be divided into a central region of the detection boundary and one or more outer peripheral regions surrounding the central region. In this case, for example, a value of a detection score of each region may be given a gradient so that the central region is relatively high (for example, the central region sets a detection score of an image detection process) and the outer peripheral region is relatively low (for example, a score gradually becomes lower toward a detection boundary outer periphery).

### (3-5. Speeding up a process)

An image size reduction process may be applied to each image of a first and a second frame fₖ, fₖ₋ₙ, and fₖ₊ₘ, thereby speeding up a process of a step S202. The image size reduction process may be executed at any time before the step S202, but may be inserted, for example, between a step S100 and a step S101.

### (3-6. Variations such as a hardware configuration)

There is no limitation on a hardware configuration of the image processing system 1. The image processing system 1 may be provided by a single server, but is not limited thereto and may be provided by a plurality of servers. Each functional unit that the control unit 11 and the storage unit 12 have may be collectively provided in one server, but may be separately arranged in two or more servers. Also, one functional unit may be provided in one server, but a part of a process of the one functional unit may be executed by one server and a remaining process may be executed by another one or more servers.

In a case where a computer executes each processing step by executing a program, and thereby the image processing system 1 or an image processing method according to the first and the second embodiments is realized, the program may be stored in a storage unit 12, or the program may be stored in a non-transitory computer-readable recording medium. The non-transitory storage medium may be provided to a consumer. The image processing system 1 may be realized by so-called cloud computing by reading a program stored in an external storage device. Alternatively, in a case where the image processing system 1 is realized by a hardware, it can be realized by various circuits such as an ASIC, an SOC, an FPGA, or a DRP. Also, at least a part of a functional configuration of the image processing system 1 may be processed by a user terminal 3 or the like by software and/or a hardware.

### <4. About a feature of an eye detection unit 111b2>

An image detection process (corresponding to a step S101 in FIG. 3) of an eye detection unit 111b2 included in the second embodiment can be independently performed, and does not necessarily need to be used in combination with a process of a mask region calculation unit 11c (S200 to S205). A process of the eye detection unit 111b2 can constitute an invention alone, and is a technical feature that can be separately filed.

For example, first, a detection score is set in an inner region of a single detection boundary Bₖ₋ₙ by interpolation or the like as in FIG. 13, or the detection boundary Bₖ₋ₙ is divided into three regions, for example, in a step S222 of FIG. 17. After that, a detection score of each region of the detection boundary Bₖ₋ₙ may be compared with a first threshold Aₜₕ₁, and a region of the first threshold Aₜₕ₁ or more may be calculated as a mask region based on a comparison result. That is, an image process (that is, an image process using a plurality of detection boundaries based on the first and the second frames) exemplified in FIG. 14 or FIG. 18 does not necessarily need to be adopted.

As an example of an apparatus to be independently implemented as described herein, an image processing system including an eye detection unit, or an image processing method or a program including an eye detection step may be provided. In this image processing system, the eye detection unit (or an eye detection step) sets an eye detection score in an eye detection region, and sets a detection score in an inner region of a detection boundary or in a detection region based on the eye detection score. Setting of the detection score can be performed according to a positional relationship with eye detection regions Cₖ, Cₖ₋ₙ, and Cₖ₊ₘ, and at least a first example (interpolation, etc. in FIG. 13) and a second example (region division in FIG. 17) can be adopted. In a technique described herein, various modifications described in the first and the second embodiments can be adopted. The adoptable modifications at least include a variation of an image detection process (replacement of a detection boundary and a detection region), a shape of the detection boundary or the detection region, a variation of a threshold, a calculation variation such as interpolation, a number of region divisions, and a process based on a rule (c) or (d).

Various embodiments according to the present invention have been described, but these are presented as examples, and are not intended to limit a scope of the invention. The novel embodiment can be carried out in other various forms, and various omissions, substitutions, and changes can be made without departing from a gist of the invention. The embodiment and its modification are included in the scope and the gist of the invention, and are included in the scope of the invention described in the claims and their equivalents.

### Reference Signs List

1: image processing system, 2: communication line, 3: user terminal, 11: control unit, 11a: image data acquisition unit, 11b, 111b: image detection unit, 11c: mask region calculation unit, 11d: mask image generation unit, 12: storage unit, 13: communication unit, 14: operation input unit, 15: monitor, 111b1: face image detection unit, 111b2: eye detection unit, A1, A6, A7: region (non-overlapping region), A2, A3, A4, A5: region (overlapping region), Aₐᵥₑ: average score, Aₜₕ₁: first threshold, Bₖ, Bₖ₋ₙ, Bₖ₊ₘ, Bₖ₋ₙ₊₁, Bₖ₊ₘ₋₁: detection boundary, B'ₖ, B'ₖ₋ₙ, B'ₖ₊ₘ: detection boundary (face detection boundary), CL: virtual central axis, Cₖ, Cₖ₋ₙ, Cₖ₊ₘ: eye detection region, 12a: image DB, 12b: detection information DB, 12c: mask information DB, 12d: masked image DB, Dₖ: Figure for mask region calculation, HL: horizontal axis, M: mask, Mₖ, Mₖ₊ₘ: mask region, P1: detection target (face), P1a: detection target (eye), P2: non-detection target, R: video, RM: masked video, fₖ, fₖ₋ₙ, fₖ₊ₘ, fₖ₊₂ₘ: frame.

## Claims

1. An image processing system comprising a mask region calculation unit, wherein:
the mask region calculation unit acquires a detection result of an image detection process for an image of a frame in a video;
the mask region calculation unit calculates a mask region for an image of a first frame based on at least the detection result for an image of a second frame;
by the image detection process, a detection boundary or a detection region is associated with at least the image of the second frame, and a detection score is set for the detection boundary or the detection region;
the detection result includes the detection boundary or the detection region and the detection score; and
the second frame is a frame at a time point different from the first frame on a time axis of the video.

2. The system according to claim 1, wherein
by the image detection process, a first detection boundary or a first detection region is associated with the image of the first frame, a first detection score is set for the first detection boundary or the first detection region, a second detection boundary or a second detection region is associated with the image of the second frame, and a second detection score is set for the second detection boundary or the second detection region,
the mask region calculation unit calculates the mask region such that a mask region of a detection target in the first frame is larger in an object movement situation than in an object stationary situation when the first and second detection scores are equal to or greater than a first threshold,
the object stationary situation is a situation where a position of the detection target is the same between the first and second frames, and
the object movement situation is a situation where the position of the detection target is different between the first and second frames.

3. The system according to claim 1 or claim 2, wherein
by the image detection process, a first detection boundary or a first detection region is associated with the image of the first frame, a first detection score is set for the first detection boundary or the first detection region, a second detection boundary or a second detection region is associated with the image of the second frame, and a second detection score is set for the second detection boundary or the second detection region,
the mask region calculation unit calculates the mask region so as not to set a mask in at least a part of a non-overlapping region when the first and second detection scores are less than a first threshold, and
the non-overlapping region is a region (a) or a region (b) described below,
(a) a region inside the first or second detection boundary and in which the first detection boundary and the second detection boundary do not overlap,
(b) a region inside the first or second detection region and in which the first detection region and the second detection region do not overlap.

4. The system according to any one of claims 1 to 3, wherein
by the image detection process, a first detection boundary or a first detection region is associated with the image of the first frame, a first detection score is set for the first detection boundary or the first detection region, a second detection boundary or a second detection region is associated with the image of the second frame, and a second detection score is set for the second detection boundary or the second detection region,
the mask region calculation unit calculates the mask region based on a figure for calculation in the image of the first frame, and
the figure is determined based on the first and second detection boundaries or the first and second detection regions and the first and second detection scores.

5. The system according to any one of claims 1 to 4, wherein
by the image detection process, an eye detection region for detecting an eye included in an image as a detection target is associated with the image of each frame, and
by the image detection process, the detection boundary is set so as to surround the eye detection region, or the detection region is set so as to overlap the eye detection region.

6. The system according to claim 5, wherein
the system further comprises an eye detection unit for executing the image detection process,
the eye detection unit:
sets an eye detection score for the eye detection region, and
sets the detection score of an inner region of the detection boundary or the detection score of the detection region based on the eye detection score.

7. The system according to claim 6, wherein
the eye detection unit sets the detection score of the inner region of the detection boundary or the detection score of the detection region according to a rule (c) or (d) below,
(c) when both eyes are detected for a face included in the image of a frame, and an eye detection score equal to or greater than a second threshold is set only for one eye detection region of the both eyes, the detection score of the inner region of the detection boundary or the detection score of the detection region is set by the eye detection score of the one eye detection region, and the detection boundary is set so as to surround the one eye detection region and not to surround the other eye detection region, and the detection region is set so as to overlap the one eye detection region and not to overlap the other eye detection region, and
(d) when only a single eye is detected for a face included in the image of a frame, the detection score of the inner region of the detection boundary or the detection score of the detection region is set by the eye detection score set for the eye detection region of the single eye.

8. The system according to claim 5 or claim 6, wherein
by the image detection process, the eye detection region and the detection score are associated with each of both eyes of a face included in each image of the first and second frames,
the mask region calculation unit calculates the mask region so that a mask is provided larger on a side of a left eye's eye detection region than on a side of a right eye's eye detection region, when the left eye's eye detection score is higher than the right eye's eye detection score in each image of the first and second frames, and
the mask region calculation unit calculates the mask region so that a mask is provided larger on the side of the right eye's eye detection region than on the side of the left eye's eye detection region, when the right eye's eye detection score is higher than the left eye's eye detection score in each image of the first and second frames.

9. The system according to any one of claims 1 to 8, wherein
the mask region calculation unit acquires a plurality of the second frames, and
the plurality of second frames include a frame in the future of the first frame and a frame in the past of the first frame.

10. An image processing method for causing a computer to execute a mask region calculation step, wherein
the mask region calculation step acquires a detection result of an image detection process for an image of a frame in a video,
the mask region calculation step calculates a mask region for an image of a first frame based on at least the detection result for an image of a second frame,
the image detection process associates a detection boundary or a detection region with at least the image of the second frame, and sets a detection score for the detection boundary or the detection region,
the detection result includes the detection boundary or the detection region and the detection score, and
the second frame is a frame at a time point different from the first frame on a time axis of the video.

11. A program for causing a computer to execute a mask region calculation process, wherein
the mask region calculation process causes the computer to acquire a detection result of an image detection process for an image of a frame in a video,
the mask region calculation process causes the computer to calculate a mask region for an image of a first frame based on at least the detection result for an image of a second frame,
the image detection process associates a detection boundary or a detection region with at least the image of the second frame, and sets a detection score for the detection boundary or the detection region,
the detection result includes the detection boundary or the detection region and the detection score, and
the second frame is a frame at a time point different from the first frame on a time axis of the video.
